# EUROPEAN PATENT APPLICATION

(11) **EP 4 378 290 A1**
(43) Date of publication of application: **05.06.2024**
(21) Application number: 22848919.1
(22) Date of filing: 22.03.2022
(51) Int. Cl.: A01B 69/00, G05D 1/02

(54) **MANAGEMENT SYSTEM, AND METHOD FOR MANAGING ACCESS OF AGRICULTURAL MACHINE TO FIELD**

(30) Priority: 30.07.2021 JP 2021125842
(71) Applicant: Kubota Corporation, Osaka 556-8601 (JP)
(72) Inventor: KUBOTA, Yuki, Sakai-shi, Osaka 590-0823 (JP); TAMBO, Toru, Sakai-shi, Osaka 590-0823 (JP); OKUBO, Itsuki, Sakai-shi, Osaka 590-0823 (JP); OTA, Kazuki, Sakai-shi, Osaka 590-0823 (JP)
(74) Representative: Global IP Europe Patentanwaltskanzlei
(86) International application number: PCT/JP2022/013220
(87) International publication number: WO 2023/007835

(57) **Abstract**

A management system manages access of a plurality of agricultural machines to a field, and includes an processing unit that causes, while a first agricultural machine among the plurality of agricultural machines is performing an agricultural task in the field, and if a conflict of agricultural tasks for the field exists between the first agricultural machine and a second agricultural machine among the plurality of agricultural machines, allows at least one of the first agricultural machine and the second agricultural machine determined based on priority data to perform the agricultural task for the field.

## Description

### TECHNICAL FIELD

The present disclosure relates to management systems for managing access of agricultural machines to fields; and methods for managing access of agricultural machines to fields.

### BACKGROUND ART

Research and development has been directed to the automation of work vehicles such as tractors to be used in fields. For example, work vehicles which travel via automatic steering by utilizing a positioning system, e.g., a GNSS (Global Navigation Satellite System) that is capable of precise positioning, have come into practical use. Work vehicles which automatically perform not only automatic steering but also speed control have also come into practical use.

Patent Document 1 discloses a work vehicle orchestration system which utilizes inter-vehicle communications to achieve orchestrated travel or orchestrated work between a work vehicle that is traveling via human driving and a work vehicle that is performing unmanned self-traveling.

### CITATION LIST

### PATENT LITERATURE

[Patent Document 1] Japanese Laid-Open Patent Publication No. 2016-31649

### SUMMARY OF INVENTION

### TECHNICAL PROBLEM

When a plurality of agricultural machines perform agricultural tasks, agricultural tasks for the same field may conflict between two or more agricultural machines. It is desired to appropriately manage access of agricultural machines to a field.

### SOLUTION TO PROBLEM

The present specification discloses solutions as recited in the following Items.

### [Item 1]

A management system for managing access of a plurality of agricultural machines to a field, comprising a processing unit that,

while a first agricultural machine among the plurality of agricultural machines is performing an agricultural task in the field and if a conflict of agricultural tasks for the field exists between the first agricultural machine and a second agricultural machine among the plurality of agricultural machines, allows at least one of the first agricultural machine and the second agricultural machine determined based on priority data to perform the agricultural task for the field.

### [Item 2]

The management system of Item 1, comprising a storage device to store the priority data, the priority data that includes information of a respective priority level assigned in accordance with a kind of agricultural task to be performed by each of the plurality of agricultural machines.

### [Item 3]

The management system of Item 1 or 2, wherein, when the priority level of the second agricultural machine is higher than the priority level of the first agricultural machine, the processing unit allows the second agricultural machine to perform the agricultural task for the field with priority over the first agricultural machine.

### [Item 4]

The management system of Item 3, wherein,
when the priority level of the second agricultural machine is higher than the priority level of the first agricultural machine,
the processing unit causes the first agricultural machine to stop the agricultural task for the field, and allows the second agricultural machine to perform the agricultural task for the field.

### [Item 5]

The management system of Item 4, wherein, when causing the first agricultural machine to stop the agricultural task for the field, the processing unit further causes the first agricultural machine to exit the field.

### [Item 6]

The management system of Item 2, wherein, when the priority level of the first agricultural machine and the priority level of the second agricultural machine are equal, the processing unit allows the first agricultural machine and the second agricultural machine to perform the agricultural tasks for the field.

### [Item 7]

The management system of Item 6, wherein,
when the priority level of the first agricultural machine and the priority level of the second agricultural machine are equal,
the processing unit allows the first agricultural machine to continue the agricultural task for the field, and further allows the second agricultural machine perform the agricultural task for the field.

### [Item 8]

The management system of Item 4, 5 or 7, wherein, after the agricultural task by the second agricultural machine for another field distinct from the field is finished, in response to receiving a notification of completion of the agricultural task transmitted from the second agricultural machine, the processing unit allows the second agricultural machine to perform the agricultural task for the field.

### [Item 9]

The management system of Item 1, wherein, when a conflict of agricultural tasks for the field exists between the first agricultural machine, the second agricultural machine, and a third agricultural machine among the plurality of agricultural machines, the processing unit allows an agricultural machine to which a highest priority level is assigned among the first agricultural machine, the second agricultural machine, and the third agricultural machine to perform the agricultural task for the field.

### [Item 10]

The management system of any of Items 2 to 8, wherein,
the priority data further includes information of a priority level assigned to an agricultural worker that is higher than the priority level of the second agricultural machine; and,
while the agricultural worker is performing an agricultural task in the field, if the second agricultural machine is trying to access the field, the processing unit disallows the second agricultural machine to perform the agricultural task for the field, based on the priority data.

### [Item 11]

The management system of any of Items 2 to 8, wherein,
the priority data further includes information of a priority level assigned to an agricultural worker that is higher than the priority level of the second agricultural machine; and,
while the agricultural worker is performing an agricultural task in the field, if the second agricultural machine is trying to access the field, the processing unit notifies a terminal apparatus being used by the agricultural worker that the second agricultural machine is trying to access the field.

### [Item 12]

The management system of any of Items 1 to 11, wherein the processing unit manages a schedule of agricultural tasks to be performed by each of the plurality of agricultural machines.

### [Item 13]

The management system of Item 12, wherein, when causing the first agricultural machine to exit the field while the first agricultural machine is performing an agricultural task in the field, the processing unit updates the schedule of agricultural tasks to be performed by the first agricultural machine.

### [Item 14]

A management system for managing access to a field between an agricultural machine and an agricultural worker, the management system comprising:
a storage device to store priority data including information of a priority level of the agricultural machine that is assigned to the agricultural machine and a priority level that is assigned to the agricultural worker and is higher than the priority level of the agricultural machine; and,
a processing unit that, if a conflict of agricultural tasks for the field exists between the agricultural machine and the agricultural worker while the agricultural worker is performing the agricultural task in the field, allow the agricultural worker to continue the agricultural task for the field with priority over the agricultural machine, based on the priority data.

### [Item 15]

A computer-implemented method for managing access of a plurality of agricultural machines to a field, the method causing a computer to execute:
while a first agricultural machine among the plurality of agricultural machines is performing an agricultural task in the field, if a conflict of agricultural tasks for the field exists between the first agricultural machine and a second agricultural machine among the plurality of agricultural machines, allowing at least one of the first agricultural machine and the second agricultural machine determined based on priority data to perform the agricultural task for the field.

### [Item 16]

A computer-implemented method for managing access to a field between an agricultural machine and an agricultural worker, the method causing a computer to execute:
from a storage device to store priority data including information of a priority level of the agricultural machine that is assigned to the agricultural machine and a priority level that is assigned to the agricultural worker and is higher than the priority level of the agricultural machine, reading the priority data; and
if a conflict of agricultural tasks for the field exists between the agricultural machine and the agricultural worker while the agricultural worker is performing the agricultural task in the field, allowing the agricultural worker to continue the agricultural task for the field with priority over the agricultural machine, based on the priority data.

General or specific aspects of various example preferred embodiments of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be provided within a single apparatus, or divided over two or more separate apparatuses.

### ADVANTAGEOUS EFFECTS OF INVENTION

According to embodiments of the present disclosure, it is possible to appropriately manage access of agricultural machines to fields.

### BRIEF DESCRIPTION OF DRAWINGS

[FIG. **1**] A diagram schematically showing an example configuration of a management system according to an illustrative embodiment of the present disclosure.
[FIG. **2**] A block diagram illustrating a schematic hardware configuration of a server computer.
[FIG. **3**] A block diagram illustrating a schematic hardware configuration of a terminal apparatus.
[FIG. **4**] A perspective view showing an example appearance of an agricultural machine according to an illustrative embodiment of the present disclosure.
[FIG. **5**] A side view schematically showing an example of an agricultural machine having an implement attached thereto.
[FIG. **6**] A block diagram showing an example schematic configuration of an agricultural machine.
[FIG. **7**] A conceptual diagram showing an example agricultural machine which performs positioning based on an RTK-GNSS.
[FIG. **8**] A diagram schematically showing an example of an agricultural machine automatically traveling along a target path in a field.
[FIG. **9**] A flowchart showing an example operation of steering control to be performed by a controller during self-driving.
[FIG. **10A**] A diagram showing an example of an agricultural machine that travels along a target path.
[FIG. **10B**] A diagram showing an example of an agricultural machine at a position which is shifted rightward from the target path.
[FIG. **10C**] A diagram showing an example of an agricultural machine at a position which is shifted leftward from the target path.
[FIG. **10D**] A diagram showing an example of an agricultural machine which is oriented in an inclined direction with respect to the target path.
[FIG. **11**] A diagram schematically showing an example situation where a plurality of agricultural machines are self-traveling inside a field and on a road outside the field.
[FIG. **12**] A diagram showing an example of a setting screen for a task schedule that is displayed on a display device of the terminal apparatus.
[FIG. **13**] A diagram showing an example of a schedule of agricultural tasks to be generated by the server.
[FIG. **14A**] A diagram showing an example relationship between agricultural tasks and priority levels.
[FIG. **14B**] A diagram showing another example of a schedule of agricultural tasks that is generated by the server.
[FIG. **14C**] A diagram showing an example of a table that associates agricultural machine IDs and the priority levels of agricultural machines.
[FIG. **15**] A flowchart illustrating the procedure of a method of managing access to a field according to an illustrative embodiment of the present disclosure.
[FIG. **16A**] A diagram for describing a method of managing access to a field according to a first example.
[FIG. **16B**] A diagram for describing the method of managing access to a field according to the first example.
[FIG. **17A**] A diagram for describing a method of managing access to a field according to a second example.
[FIG. **17B**] A diagram for describing the method of managing access to a field according to the second example.
[FIG. **18A**] A diagram for describing a method of managing access to a field according to a third example.
[FIG. **18B**] A diagram for describing the method of managing access to a field according to the third example.
[FIG. **19A**] A diagram for describing a method of managing access to a field according to a fourth example.
[FIG. **19B**] A diagram for describing the method of managing access to a field according to the fourth example.
[FIG. **19C**] A diagram for describing the method of managing access to a field according to the fourth example.
[FIG. **20A**] A diagram showing an example of a table that associates agricultural workers and priority levels.
[FIG. **20B**] A still another example of a schedule of agricultural tasks that is generated by the server.
[FIG. **21A**] A diagram schematically showing an agricultural worker performing an agricultural task in a field.
[FIG. **21B**] A diagram for describing, when an agricultural worker is performing an agricultural task in the field, urging the agricultural worker to exit the field if a conflict of agricultural tasks exists with an agricultural machine.
[FIG. **22**] A diagram showing an example of a pop-up indication on a display of the terminal apparatus.

### DESCRIPTION OF EMBODIMENTS

Hereinafter, preferred embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following preferred embodiments are only exemplary, and the techniques according to the present disclosure are not limited to the following preferred embodiments. For example, numerical values, shapes, materials, steps, and orders of steps, layout of a display screen, etc., that are indicated in the following preferred embodiments are only exemplary, and admit of various modifications so long as it makes technological sense. Any one implementation may be combined with another so long as it makes technological sense to do so.

In the present disclosure, an "agricultural machine" means a machine for agricultural applications. Examples of agricultural machines include tractors, harvesters, rice transplanters, vehicles for crop management, vegetable transplanters, mowers, seeders, spreaders, and mobile robots for use in fields. Not only may a work vehicle (such as a tractor) function as an "agricultural machine" alone by itself, but also an implement that is attached to or towed by a work vehicle may together in combination with the work vehicle function as an "agricultural machine". For the ground surface within a field, an agricultural machine performs agricultural work such as tilling, seeding, preventive pest control, manure spreading, planting of crops, or harvesting. Such agricultural work or tasks may be referred to simply as "work" or "tasks".

In the present disclosure, "self-driving" means controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work may also be controlled automatically. In the case where the agricultural machine is a vehicle-type machine, traveling of the agricultural machine via self-driving will be referred to as "self-traveling". The controller may control at least one of: steering that is required in the movement of the agricultural machine; adjustment of the moving speed; and beginning and ending a move. In the case of controlling a work vehicle having an implement attached thereto, the controller may control operations such as raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also have the function of moving partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A portion or an entirety of the controller may reside outside the agricultural machine. Control signals, commands, data, etc., may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel within the field or outside the fields (e.g., on roads) in an unmanned manner. During an autonomous move, operations of detecting and avoiding obstacles may be performed.

A management system according to an embodiment of the present disclosure is, in effect, realized as a computer system. The management system includes a processing unit. The aforementioned controller may also function as a processing unit. Based on priority levels which are respectively assigned to a plurality of agricultural machines, the processing unit manages access of the plurality of agricultural machines to a field. When any conflict of agricultural tasks exists among the plurality of agricultural machines for the same field, the processing unit performs a process for permitting one or more agricultural machines, as determined based on priority data, to have access to the field. For example, for each agricultural machine, a priority level may be assigned in accordance with the kind of agricultural task to be performed by the respective one of the plurality of agricultural machines. The agricultural machine that is permitted access to the field may move to the field and perform the agricultural task.

The processing unit may be a computer that includes one or more processors and one or more memories, for example. In that case, the processor may consecutively execute a computer program that is stored in the memory(s) to achieve a desired process. The processing unit may be mounted on the agricultural machine, or located at a place that is remote from the agricultural machine, e.g., at the home or the office of a user who monitors the agricultural machine. One of multiple electronic control units (ECU) that is mounted on the agricultural machine may function as the processing unit, or an ECU that is mounted on one of a plurality of agricultural machines may be designated as a master computer to function as the processing unit. Alternatively, an external server computer or an edge computer that communicates with the agricultural machine via a network may function as the processing unit. Furthermore, a terminal apparatus may function as the processing unit. Examples of terminal apparatuses include stationary type computers, smartphones, tablet computers, laptop computers, or the like.

While a first agricultural machine among a plurality of agricultural machines is performing an agricultural task for a field, if a conflict of agricultural tasks for the field exists between the first agricultural machine and a distinct second agricultural machine among the plurality of agricultural machines, a processing unit according to an aspect of the present disclosure allows at least one of the first agricultural machine and the second agricultural machine that is determined based on priority data to perform the agricultural task for the field. When the priority level of the second agricultural machine is higher than the priority level of the first agricultural machine, the processing unit allows the second agricultural machine to perform the agricultural task for the field with priority over the first agricultural machine. For example, the processing unit may cause the first agricultural machine to stop the agricultural task for the field, and instead allow the second agricultural machine to perform the agricultural task for the field. As a result of the processing unit processing access to the field, the first agricultural machine of a low priority level concedes the agricultural task for the field to the second agricultural machine of a high priority level.

Consider a case where an agricultural worker manually manipulates an agricultural machine to perform an agricultural task or move. In this case, even if a conflict of agricultural tasks for the field exists, for example, agricultural workers may communicate with one another; and, in accordance with the content of the agricultural tasks or a task schedule, they may concede their agricultural tasks for the field to an agricultural worker who is to perform a task of a high priority level. As used herein, by saying that a conflict of agricultural tasks for the field exists, it is meant that, for example: when a certain agricultural machine is already performing an agricultural task in a field, another agricultural machine subsequently tries to performing an agricultural task in the field; or, when no agricultural machines are performing agricultural tasks in a field, two or more agricultural machines attempt to perform their agricultural tasks in the field. An agricultural worker who is to perform a task of a low priority level may be made to wait until the agricultural task for the field ends, perform manual work while leaving the agricultural machine alone, or abandon the agricultural task for the field altogether and consider performing an agricultural task in another field, for example. Alternatively, in accordance with the content of the agricultural tasks or a task schedule, an administrator who manages the entirety of agricultural tasks may decide the agricultural worker who is to perform an agricultural task for the field as appropriate. However, if this decision includes a human error, an agricultural task of a high priority level may be postponed, for example, thus resulting in inefficiency.

In contrast, according to an embodiment of the present disclosure, priority levels are assigned to agricultural machines, and the agricultural machine to be allowed to perform an agricultural task is determined based on the priority levels, whereby streamlining of tasks can be achieved even in the presence of a conflict of agricultural tasks for the field.

When the priority level of the first agricultural machine and the priority level of the second agricultural machine are equal, a processing unit according to another aspect of the present disclosure may allow the first agricultural machine and the second agricultural machine to perform agricultural tasks for the field. By allowing two or more agricultural machines to perform agricultural tasks in the same field, the agricultural work can be accelerated.

When a conflict of agricultural tasks for the field exists between an agricultural worker and an agricultural machine, a processing unit according to still another aspect of the present disclosure may allow the agricultural worker to continue the agricultural task for the field with priority over the agricultural machine, based on priority data. Preferably, a priority level that is higher than the priority level of any agricultural machine is assigned to an agricultural worker. As a result, the agricultural worker can be allowed to continue the agricultural task without being interfered by the agricultural machines.

### [1. configuration of management system]

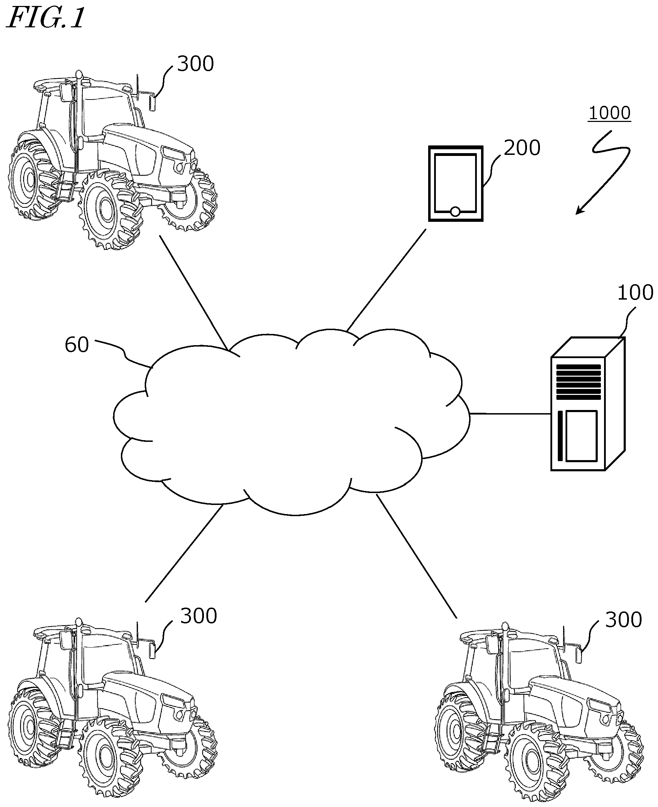

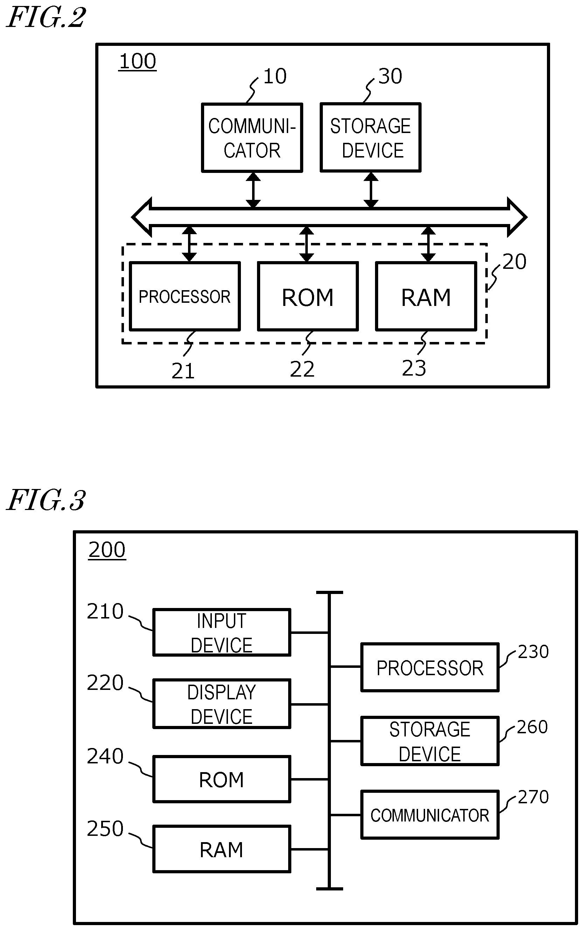

FIG. 1 is a diagram schematically showing an example configuration of a management system **1000** according to the present embodiment. FIG. 2 is a block diagram illustrating a schematic hardware configuration of a server computer **100.** The management system **1000** includes a server computer **100** (hereinafter denoted as the "server **100")** and one or more terminal apparatuses **200.** Via a wired or wireless network **60,** the plurality of agricultural machines **300** may be connected to the management system **1000** in such a manner that they are capable of communicating with one another. FIG. **1** shows an example connection where three agricultural machines **300** are connected to the management system **1000** via the network **60.** However, any number of agricultural machines **300** may be connected to the management system **1000.** For example, all of a plurality of agricultural machines that are possessed by an agricultural administrator may be connected to the management system **1000.** From the standpoint of reducing communication delays and dispersing the network load, the management system **1000** may further include one or more edge computers. In the present embodiment, a portion of the server **100** functions as a processing unit.

### (server 100)

The server **100** may be a computer that is located at a remote place from the agricultural machine **300.** The server **100** includes a communicator **10,** a processing unit **20,** and a storage device **30.** These component elements are connected to one another via a bus so as to be capable of communicating with another. The server **100** can function as a cloud server that provides centralized management of a schedule of agricultural tasks to be performed by agricultural machines in a field, and assists in agriculture by using the data that it manages. For example, the user may generate a task schedule by using a terminal apparatus **200,** and upload it to the server **100** via the network **60.**

The communicator **10** is a communication module for communicating with the terminal apparatus **200** and the agricultural machines **300** via the network **60.** For example, the communicator **10** is able to perform wired communications compliant with communication standards such as IEEE1394 (registered trademark) or Ethernet (registered trademark). For example, the communicator **10** is able to perform wireless communications compliant with the Bluetooth (registered trademark) standards or the Wi-Fi standards, or 3G, 4G, 5G or other cellular mobile communications.

The processing unit **20** includes a processor **21,** a ROM (Read Only Memory) **22,** a RAM (Random Access Memory) **23,** and the like, for example. Software (or firmware) for the processor **21** to perform at least one process may be implemented in the ROM **22.** Such software may be recorded on a computer-readable storage medium, e.g., an optical disc, and marketed as packaged software, or provided to the user via the network **60.**

The processor **21** is a semiconductor integrated circuit, and includes a central processing unit (CPU). The processor **21** may be realized as a microprocessor or microcontroller. The processor **21** consecutively executes a computer program stored in the ROM **22,** in which instructions for executing at least one process are described, to realize desired processes.

In addition to or instead of the processor **21** the processing unit **20** may include an FPGA (Field Programmable Gate Array), a GPU (Graphics Processing Unit), an ASIC (Application Specific Integrated Circuit), an ASSP (Application Specific Standard Product) having a CPU mounted therein, or a combination of two or more circuits selected from among such circuits.

The ROM **22** is a writable memory (e.g., a PROM), a rewritable memory (e.g., a flash memory), or a read-only memory, for example. The ROM **22** stores a program to control the operation of the processor **21.** The ROM **22** may not be a single storage medium, but may be a set of storage media. A portion of the set of storage media may be removable memory.

The RAM **23** provides a work area into which the control program stored in the ROM **22** will be temporarily laid out during boot-up. The RAM **23** may not necessarily be a single storage medium, and may be a set of storage media.

The storage device **30** mainly functions as a storage for databases. An example of the storage device **30** is a cloud storage. The storage device **30** may be a magnetic storage device or a semiconductor storage device, for example. An example of a magnetic storage device is a hard disk drive (HDD). An example of a semiconductor storage device is a solid state drive (SSD). However, the storage device **30** may be an external storage device that is connected to the server **100** via the network **60.**

### (terminal apparatus 200)

FIG. **3** is a block diagram illustrating a schematic hardware configuration of the terminal apparatus **200.**

The terminal apparatus **200** includes an input device **210,** a display device **220,** a processor **230,** a ROM **240,** a RAM **250,** a storage device **260,** and a communicator **270.** These component elements are connected to one another via a bus so as to be capable of communicating with another.

The input device **210** is a device that converts instructions from the user into data and inputs it to a computer. Examples of the input device **210** are a keyboard, a mouse, and a touchscreen panel. Examples of the display device **220** are a liquid crystal display and an organic EL display. The description of each of the processor **230,** the ROM **240,** the RAM **250,** the storage device **260,** and the communicator **270** has already been given in the hardware configuration example of the server **100,** and is omitted.

### [2. example configuration of agricultural machine]

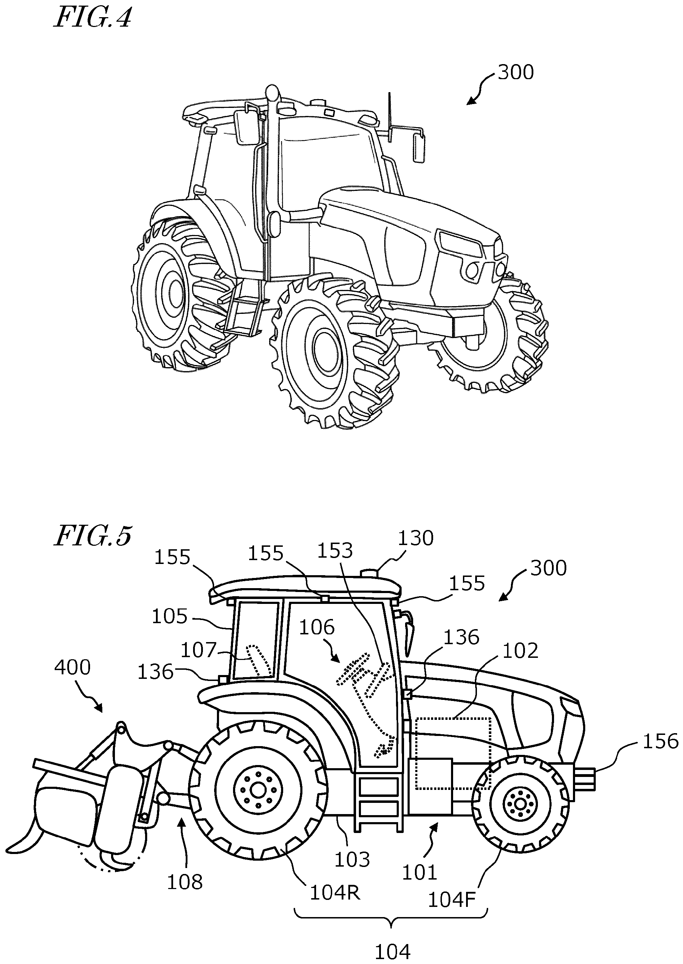

FIG. **4** is a perspective view showing an example appearance of the agricultural machine **300** according to the present embodiment. FIG. **5** is a side view schematically showing an example of the agricultural machine **300** having an implement **400** attached thereto. The agricultural machine **300** according to the present embodiment is agricultural tractor (work vehicle) having the implement **400** attached thereto. The agricultural machine **300** is not limited to a tractor, and may not have the implement **400** attached thereto.

As shown in FIG. **5****,** the agricultural machine **300** includes a vehicle body **101,** a prime mover (engine) **102,** and a transmission **103.** On the vehicle body **101,** tires (wheels) **104** and a cabin **105** are provided. The tires **104** include a pair of front wheels **104F** and a pair of rear wheels **104R.** Inside the cabin **105,** a driver's seat **107,** a steering device **106,** an operational terminal **153,** and switches for manipulation are provided. In the case where the agricultural machine **300** does not travel on public roads, either pair of the front wheels **104F** or the rear wheels **104R** may be crawlers, rather than tires.

The agricultural machine **300** shown in FIG. **5** further includes a plurality of cameras **155.** The cameras **155** may be provided at the front/rear/right/left of the agricultural machine **300,** for example. The cameras **155** capture images of the surrounding environment of the agricultural machine **300,** and generate image data. The images acquired by the cameras **155** may be transmitted to the terminal apparatus **200** which is responsible for remote monitoring. The images may be used to monitor the agricultural machine **300** during unmanned driving. The cameras **155** may also be used in order to generate images for recognizing white lines, signs, indications, or obstacles in the surroundings when the agricultural machine **300** travels on a road.

The agricultural machine **300** further includes the positioning device **130.** The positioning device **130** includes a GNSS receiver. The GNSS receiver includes an antenna to receive a signal(s) from a GNSS satellite(s) and a processing circuit to determine the position of the agricultural machine **300** based on the signal(s) received by the antenna. The positioning device **130** receive a GNSS signal(s) transmitted from a GNSS satellite (s), and performs positioning on the basis of the GNSS signal(s). GNSS is a general term for satellite positioning systems, such as GPS (Global Positioning System), QZSS (Quasi-Zenith Satellite System, e.g., MICHIBIKI), GLONASS, Galileo, BeiDou, and the like. Although the positioning device **130** in the present preferred embodiment is located above the cabin **105,** it may be located at any other position.

The positioning device **130** may include an inertial measurement unit (IMU). It is possible to complement the position data by using a signal from the IMU. The IMU can measure tilts and minute motions of the agricultural machine **300.** By complementing the position data based on satellite signals using the data acquired by the IMU, the positioning performance can be improved.

The agricultural machine **300** illustrated in FIG. **5** further includes an LiDAR sensor **156.** The LiDAR sensor **156** in this example is The LiDAR sensor **156** in this example is located at a lower portion of the front surface of the vehicle body **101.** The LiDAR sensor **156** may alternatively be located at other positions. While the agricultural machine **300** is moving, the LiDAR sensor **156** repetitively outputs sensor data representing the distances and directions of measurement points on objects existing in the surrounding environment, or two-dimensional or three-dimensional coordinate values of such measurement points. The sensor data which is output from the LiDAR sensor **156** is processed by the controller of the agricultural machine **300.** By utilizing SLAM (Simultaneous Localization and Mapping) or other algorithms, for example, the controller is able to perform processes such as generating an environment map based on the sensor data. The generation of an environment map may be performed by a computer, e.g., the server **100,** that is external to the agricultural machine **300.** The sensor data that is output from the LiDAR sensor **156** may also be utilized for obstacle detection.

The positioning device **130** may utilize the data acquired by the cameras **155** or the LiDAR sensor **156** for positioning. When objects serving as characteristic points exist in the environment that is traveled by the agricultural machine **300,** the position of the agricultural machine **300** can be estimated with a high accuracy based on data that is acquired with the cameras **155** or the LiDAR sensor **156** and an environment map that is previously recorded in the storage device. By correcting or complementing position data based on the satellite signal(s) using the data acquired by the cameras **155** or the LiDAR sensor **156,** it becomes possible to identify the position of the agricultural machine **300** with a higher accuracy.

The agricultural machine **300** further includes a plurality of obstacle sensors **136.** In the example shown in FIG. **5****,** the obstacle sensors **136** are provided at the front and the rear of the cabin **105.** The obstacle sensors **136** may be used for detecting obstacles in the surroundings during self-traveling to come to a halt or detour around it.

The prime mover **102** may be a diesel engine, for example. Instead of a diesel engine, an electric motor may be used. The transmission **103** can change the propulsion and the moving speed of the agricultural machine **300** through a speed changing mechanism. The transmission **103** can also switch between forward travel and backward travel of the agricultural machine **300.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the agricultural machine **300.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of a controller located in the agricultural machine **300,** the steering angle may be automatically adjusted by the power of the hydraulic device or electric motor.

A linkage device **108** is provided at the rear of the vehicle body **101.** The linkage device **108** may include, e.g., a three-point linkage (also referred to as a "three-point link" or a "three-point hitch"), a PTO (Power Take Off) shaft, a universal joint, and a communication cable. The linkage device **108** allows the implement **400** to be attached to or detached from the agricultural machine **300.** While towing the implement **400,** the agricultural machine **300** allows the implement **400** to perform a predetermined task. The linkage device **108** may be provided frontward of the vehicle body **101.** In that case, the implement may be connected frontward of the agricultural machine **300.**

Although the agricultural machine **300** illustrated in FIG. **5** is a rotary tiller, the implement **400** is not limited to a rotary tiller. For example, any arbitrary implement such as a seeder, a spreader, a transplanter, a mower, a harvester, a sprayer, or a harrow, may be connected to the agricultural machine **300** for use.

The agricultural machine **300** illustrated in FIG. **5** is capable of human driving; alternatively, it may only support unmanned driving. In that case, component elements which are only required for human driving, e.g., the cabin **105,** the steering device **106,** and the driver's seat **107** do not need to be provided in the agricultural machine **300.** An unmanned agricultural machine **300** may travel via autonomous driving, or by remote manipulation by a user.

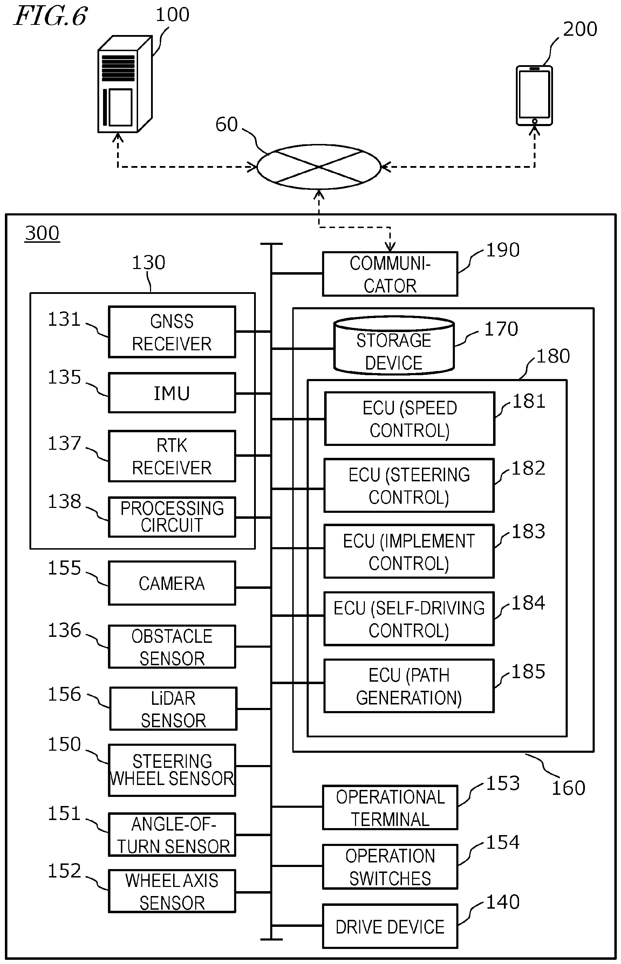

FIG. **6** is a block diagram showing an example schematic configuration of the agricultural machine **300.** The agricultural machine **300** and the implement **400** can communicate with each other via a communication cable that is included in the linkage device **108.**

In addition to the cameras **155,** the positioning device **130,** the obstacle sensors **136,** and the operational terminal **153,** the agricultural machine **300** in the example of FIG. **6** includes a drive device **140,** steering wheel sensor **150,** an angle-of-turn sensor **151,** a wheel axis sensor **152,** operation switches **154,** a control system **160,** and a communicator **190.**

The positioning device **130** includes a GNSS receiver **131,** and an inertial measurement unit **135.** The control system **160** includes a storage device **170** and a controller **180.** The controller **180** includes a plurality of electronic control units **181** to **185.** Note that FIG. **6** shows component elements which are relatively closely related to the operations of self-driving by the agricultural machine **300,** while other component elements are omitted from illustration.

The GNSS receiver 131 in the positioning device **130** receive satellite signals which are transmitted from multiple GNSS satellites, and generate GNSS data based on the satellite signals. The GNSS data may be generated in a predetermined format, such as the NMEA-0183 format, for example. The GNSS data may include values representing the identification number, angle of elevation, azimuth angle, and reception intensity of each satellite from which a satellite signal was received, for example.

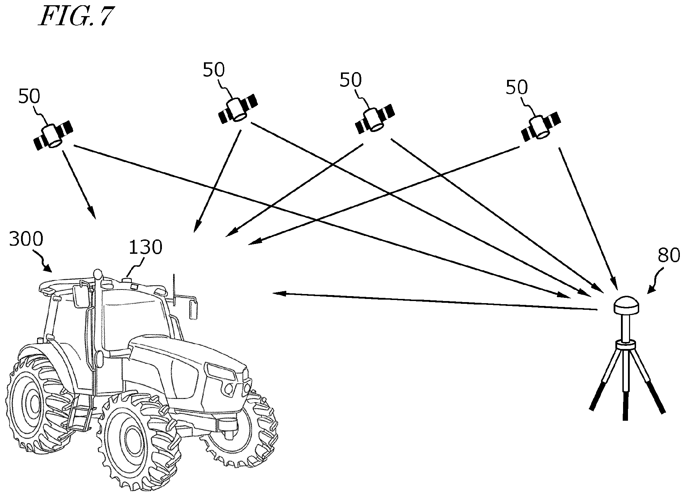

The positioning device **130** shown in FIG. **6** performs positioning of the agricultural machine **300** by utilizing an RTK (Real Time Kinematic)-GNSS. FIG. **7** is a conceptual diagram showing an example of the agricultural machine **300** which performs positioning based on an RTK-GNSS. In the positioning based on an RTK-GNSS, not only satellite signals transmitted from multiple GNSS satellites **50,** but also a correction signal that is transmitted from a reference station **80** is used. The reference station **80** may be located near the field that is traveled by the agricultural machine **300** (e.g., at a position within 1 km of the agricultural machine **300).** The reference station **80** generates a correction signal of, e.g., an RTCM format based on the satellite signals received from the multiple GNSS satellites **50,** and transmits the correction signal to the positioning device **130.** The RTK receiver **137,** which includes an antenna and a modem, receives the correction signal transmitted from the reference station **80.** Based on the correction signal, the processing circuit **138** of the positioning device **130** corrects the result of positioning by the GNSS receiver **131.** Use of an RTK-GNSS enables positioning with an accuracy on the order of several cm of errors, for example. Positional information (including latitude, longitude, and altitude information) is acquired through the highly accurate positioning by an RTK-GNSS. The positioning device **130** may calculate the position of the agricultural machine **300** as frequently as, e.g., one to ten times per second.

Note that the positioning method is not limited to an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **80,** positional information may be generated without using the correction signal. In that case, the positioning device **130** may lack the RTK receiver **137.**

The positioning device **130** in the present preferred embodiment further includes an IMU **135.** The IMU **135** includes a 3-axis accelerometer and a 3-axis gyroscope. The IMU **135** may include a direction sensor such as a 3-axis geomagnetic sensor. The IMU **135** functions as a motion sensor which can output signals representing parameters such as acceleration, velocity, displacement, and attitude of the agricultural machine **300.** Based not only on the GNSS signals and the correction signal but also on a signal that is output from the IMU **135,** the positioning device **130** can estimate the position and orientation of the agricultural machine **300** with a higher accuracy. The signal that is output from the IMU **135** may be used for the correction or complementation of the position that is calculated based on the satellite signals and the correction signal. The IMU **135** outputs a signal more frequently than does the GNSS receiver **131.** Utilizing this highly frequent signal, the processing circuit **138** can measure the position and orientation of the agricultural machine **300** more frequently (e.g., about 10 Hz or above). Instead of the IMU **135,** a 3-axis accelerometer and a 3-axis gyroscope may be separately provided. The IMU **135** may be provided as a separate device from the positioning device **130.**

In the example of FIG. **6****,** the processing circuit **138** calculates the position of the agricultural machine **300** based on signals which are output from the GNSS receiver **131,** the RTK receiver **137,** and the IMU **135.** Furthermore, the processing circuit **138** may estimate or correct the position of the agricultural machine **300** based on data that is acquired by the cameras **155** or the LiDAR sensor **156.** By using the data acquired by the cameras **155** or the LiDAR sensor **156,** the accuracy of positioning can be further enhanced.

The positional calculation may instead be performed by any device other than the positioning device **130.** For example, the controller **180** or an external computer may acquire output data from the each receiver and each sensor as is required for positioning, and estimate the position of the agricultural machine **300** based on such data.

The cameras **155** are imagers that image the surrounding environment of the agricultural machine **300.** Each camera **155** may include an image sensor such as a CCD (Charge Coupled Device) or a CMOS (Complementary Metal Oxide Semiconductor), for example. In addition, each camera **155** may include an optical system including one or more lenses and a signal processing circuit. During travel of the agricultural machine **300,** the cameras **155** image the surrounding environment of the agricultural machine **300,** and generate image (e.g., motion picture) data. The cameras **155** are able to capture motion pictures at a frame rate of 3 frames/second (fps: frames per second) or greater, for example. The images generated by the cameras **155** may be used when a remote supervisor checks the surrounding environment of the agricultural machine **300** with the terminal apparatus **200,** for example. The images generated by the cameras **155** may also be used for the purpose of positioning or obstacle detection. As shown in FIG. **5****,** a plurality of cameras **155** may be provided at different positions on the agricultural machine **300,** or a single camera may be provided. A visible camera(s) for generating visible images and an infrared camera(s) for generating infrared images may be separately provided. Both of a visible camera (s) and an infrared camera(s) may be provided as cameras for generating images for monitoring purposes. Infrared cameras may also be used for obstacle detection at nighttime.

The obstacle sensors **136** detect objects around the agricultural machine **300.** Each obstacle sensor **136** may include a laser scanner or an ultrasonic sonar, for example. When an object exists at a position closer to the obstacle sensor **136** than a predetermined distance, the obstacle sensor **136** outputs a signal indicating the presence of an obstacle. A plurality of obstacle sensors **136** may be provided at different positions of the agricultural machine **300.** For example, a plurality of laser scanners and a plurality of ultrasonic sonars may be located at different positions of the agricultural machine **300.** Providing a multitude of obstacle sensors **136** can reduce blind spots in monitoring obstacles around the agricultural machine **300.**

The drive device **140** includes various devices that are needed for the traveling of the agricultural machine **300** and the driving of the implement **400,** e.g., the aforementioned prime mover **102** and transmission **103,** a differential including a locking differential mechanism, the steering device **106,** and the linkage device **108,** for example. The prime mover **102** may include an internal combustion engine such as a diesel engine. Instead of an internal combustion engine or in addition to an internal combustion engine, the drive device **140** may include an electric motor that is dedicated to traction purposes.

The steering wheel sensor **150** measures the angle of rotation of the steering wheel of the agricultural machine **300.** The angle-of-turn sensor **151** measures the angle of turn of the front wheels **104F,** which are the wheels responsible for steering. Measurement values by the steering wheel sensor **150** and the angle-of-turn sensor **151** are used for steering control by the controller **180.**

The wheel axis sensor **152** measures the rotational speed, i.e., the number of revolutions per unit time, of a wheel axis that is connected to a tire **104.** The wheel axis sensor **152** may be a sensor utilizing a magnetoresistive element (MR), a Hall generator, or an electromagnetic pickup, for example. The wheel axis sensor **152** may output a numerical value indicating the number of revolutions per minute (unit: rpm) of the wheel axis, for example. The wheel axis sensor **152** is used to measure the speed of the agricultural machine **300.**

The storage device **170** includes one or more storage media such as a flash memory or a magnetic disc. The storage device **170** stores various data that is generated by the sensors and by the controller **180.** In the storage device **170,** an environment map including the inside of the field and any public roads outside the field and information of target paths are previously recorded. In the case where one or more of a plurality of ECUs included in the controller **180** function(s) as the processing unit **20** according to the present embodiment, a schedule of agricultural tasks to be performed by the agricultural machine **300,** data of a work log, and the like may be stored in the storage device **170,** for example.

The controller **180** includes a plurality of ECUs. The plurality of ECUs may include, for example, an ECU **181** for speed control, an ECU **182** for steering control, an ECU **183** for implement control, an ECU **184** for self-driving control, and an ECU **185** for path generation, for example. The ECU **181** controls the prime mover **102,** the transmission **103,** and the brakes included in the drive device **140,** thus controlling the speed of the agricultural machine **300.** The ECU **182** controls the hydraulic device or electric motor included in the steering device **106** based on a measurement value of the steering wheel sensor **150,** thus controlling the steering of the agricultural machine **300.** In order to cause the implement **400** to perform a desired operation, the ECU **183** controls the operation of the three-point link, the PTO shaft, etc., that are included in the linkage device **108.** Also, the ECU **183** generates a signal to control the operation of the implement **400,** and transmits this signal from the communication device **190** to the implement **400.** Based on signals which are output from the positioning device **130,** the steering wheel sensor **150,** the angle-of-turn sensor **151,** and the wheel axis sensor **152,** the ECU **184** performs computation and control for achieving self-driving. During self-driving, the ECU **184** sends a speed command value to the ECU **181,** and sends a steering angle command value to the ECU **182.** In response to the speed command value, the ECU **181** controls the prime mover **102,** the transmission **103,** or the brakes to change the speed of the agricultural machine **300.** In response to the steering angle command value, the ECU **182** controls the steering device **106** to change the steering angle. The ECU **185** controls communications of the communicator **190** with other devices. For example, the ECU **185** generates a target path for the agricultural machine **300,** and records it to the storage device **170.**

In the case where the processing unit **20** of the server **100** determines a next field for which to permit the agricultural machine **300** an agricultural task, the ECU **185** may receive the positional information of a next field that is transmitted from the processing unit **20,** and generate a target path from the current point to the next field based on the received positional information of the next field, for example.

Through the action of these ECUs, the controller **180** achieves self-driving, determination of a target path, and communications with other devices. During self-driving, the controller **180** controls the drive device **140** based on the position of the agricultural machine **300** as measured or estimated by the positioning device **130** and the target path stored in the storage device **170.** As a result, the controller **180** causes the agricultural machine **300** to travel along the target path.

The plurality of ECUs included in the controller **180** may communicate with one another according to a vehicle bus standard such as CAN (Controller Area Network). Although the ECUs **181** to **185** are illustrated as individual corresponding blocks in FIG. **6****,** each of these functions may be implemented by a plurality of ECUs. Alternatively, an onboard computer that integrates the functions of at least some of the ECUs **181** to **185** may be provided. The controller **180** may include ECUs other than the ECUs **181** to **185,** and any number of ECUs may be provided in accordance with functionality. For example, the controller **180** may further include an ECU to be used for managing access of the agricultural machine **300** to a field. Each ECU includes a control circuit including one or more processors.

The communication device **190** is a circuit that performs communications with the communication IF of the implement **400.** The communication device **190** includes circuitry to perform exchanges of signals complying with an ISOBUS standard such as ISOBUS-TIM, for example, between itself and the communication IF of the implement **400.** This causes the implement **400** to perform a desired operation, or allows information to be acquired from the implement **400.**

The operational terminal **153** is a terminal for the user to perform a manipulation related to the traveling of the agricultural machine **300** and the operation of the implement **400,** and may also be referred to as a virtual terminal (VT). The operational terminal **153** may include a display device such as a touch screen panel, and/or one or more buttons. The display device may be a display such as a liquid crystal or an organic light-emitting diode (OLED), for example. By manipulating the operational terminal **153,** the user can perform various manipulations, such as switching ON/OFF the self-driving mode, recording or editing an environment map, setting a target path, and switching ON/OFF the implement **400.** At least some of these manipulations can also be realized by manipulating the operation switches **154.** The operational terminal **153** may be configured so as to be detachable from the agricultural machine **300.** A user who is remote from the agricultural machine **300** may manipulate the detached operational terminal **153** to control the operation of the agricultural machine **300.** Instead of the operational terminal **153,** the user may manipulate a computer on which necessary application software is installed, e.g., the terminal apparatus **200,** to control the operation of the agricultural machine **300.** The operational terminal **153** can also be used as a terminal apparatus to transmit a request signal to the server **100.**

### [3. self-traveling operation]

First, an example operation of self-traveling by the agricultural machine **300** will be described.

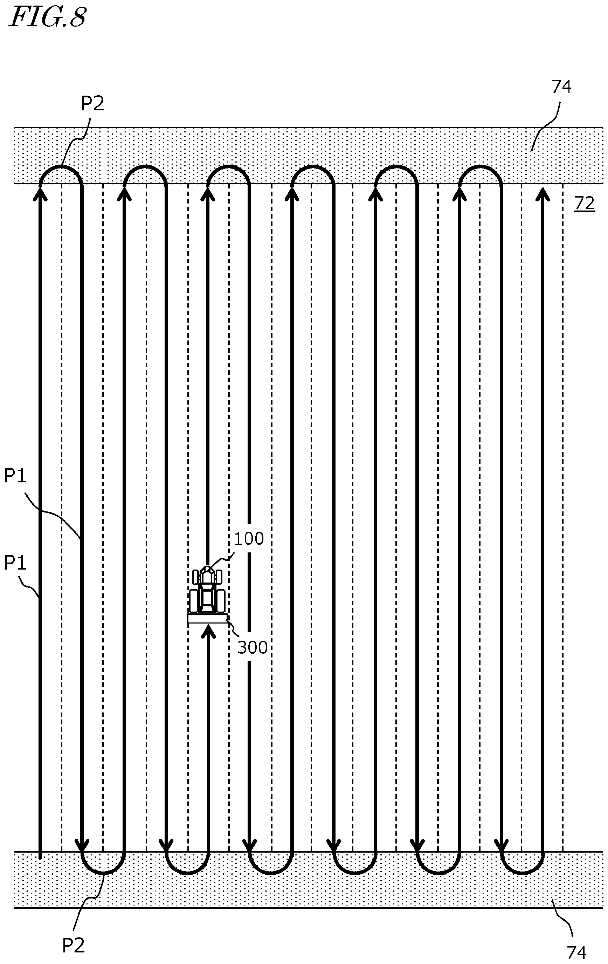

FIG. **8** is a diagram schematically showing an example of an agricultural machine **300** automatically traveling along a target path in a field. In this example, the field includes a work area **72** in which the agricultural machine **300** performs a task by using the implement **400,** and headlands **74** that are located near the outer edge of the field. The user may designate which regions on the map of the field would correspond to the work area **72** and the headlands **74** in advance. The target path in this example includes a plurality of parallel main paths **P1** and a plurality of turning paths **P2** interconnecting the plurality of main paths **P1.** The main paths **P1** are located in the work area **72,** whereas the turning paths **P2** are located in the headlands **74.** Although each main path **P1** in FIG. **8** is illustrated as a linear path, each main path **P1** may also include a curved portion(s). Broken lines in FIG. **8** depict the working breadth of the implement **400.** The working breadth is previously set and recorded in the storage device **170.** The working breadth may be set and recorded as the user manipulates the operational terminal **153.** Alternatively, the working breadth may be automatically recognized and recorded when the implement **400** is connected to the agricultural machine **300.** The interval between the plurality of main paths **P1** may be matched to the working breadth. The target path may be generated based on the user's manipulation, before self-driving is begun. The target path may be generated so as to cover the entire work area **72** in the field, for example. Along the target path shown in FIG. **8****,** the agricultural machine **300** automatically travels while reciprocating, from a beginning point of work to an ending point of work. Note that the target path shown in FIG. **8** is only an example, and the target path may be arbitrarily determined.

Next, an example control by the controller **180** during self-driving will be described.

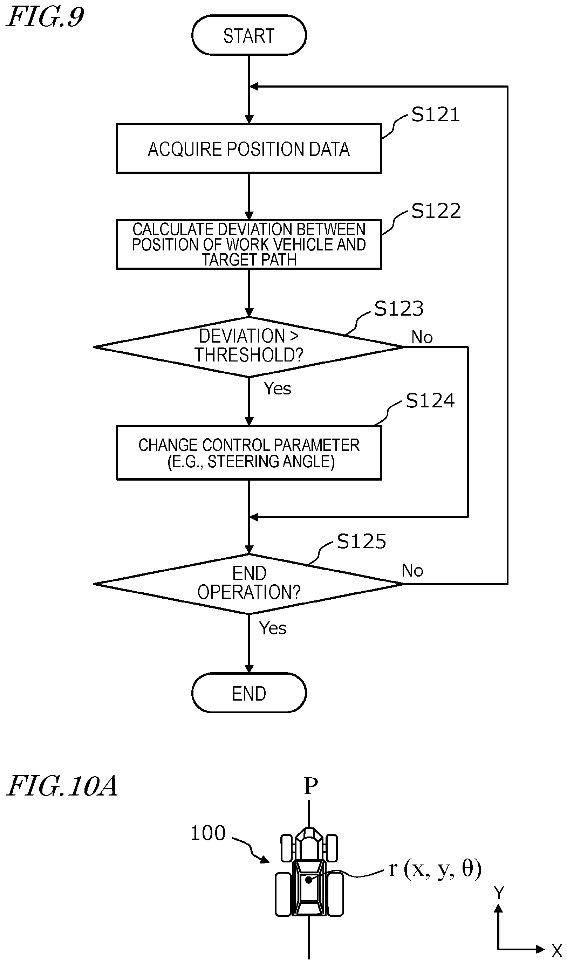

FIG. **9** is a flowchart showing an example operation of steering control to be performed by the controller **180** during self-driving. During travel of the agricultural machine **300,** the controller **180** performs automatic steering by performing the operation from steps **S121** to **S125** shown in FIG. **9****.** The speed will be maintained at a previously-set speed, for example. First, during travel of the agricultural machine **300,** the controller **180** acquires data representing the position of the agricultural machine **300** that is generated by the positioning device **130** (step **S121**). Next, the controller 180 calculates a deviation between the position of the agricultural machine **300** and the target path (step **S122**). The deviation represents the distance between the position of the agricultural machine **300** and the target path at that moment. The controller **180** determines whether the calculated deviation in position exceeds the previously-set threshold or not (step **S123**). If the deviation exceeds the threshold, the controller **180** changes a control parameter of the steering device included in the drive device **140** so as to reduce the deviation, thus changing the steering angle (step **S124**). If the deviation does not exceed the threshold at step **S123,** the operation of step **S124** is omitted. At the following step **S125,** the controller **180** determines whether a command to end operation has been received or not. The command to end operation may be given when the user has instructed that self-driving be suspended through remote manipulations, or when the agricultural machine **300** has arrived at the destination, for example. If the command to end operation has not been issued, the control returns to step **S121** and performs a similar operation based on a newly measured position of the agricultural machine **300.** The controller **180** repeats the operation from steps **S121** to **S125** until a command to end operation is given. The aforementioned operation is executed by the ECUs **182** and **184** in the controller **180.**

In the example shown in FIG. **9****,** the controller **180** controls the drive device **140** based only on a deviation between the position of the agricultural machine **300** as identified by the positioning device **130** and the target path. However, a deviation in terms of directions may further be considered in the control. For example, when a directional deviation exceeds a previously-set threshold, where the directional deviation is an angle difference between the orientation of the agricultural machine **300** as identified by the positioning device **130** and the direction of the target path, the controller **180** may change the control parameter (e.g., steering angle) of the steering device of the drive device **140** in accordance with the deviation.

Hereinafter, with reference to FIGS. **10A** to **10D****,** an example of steering control by the controller **180** will be described more specifically.

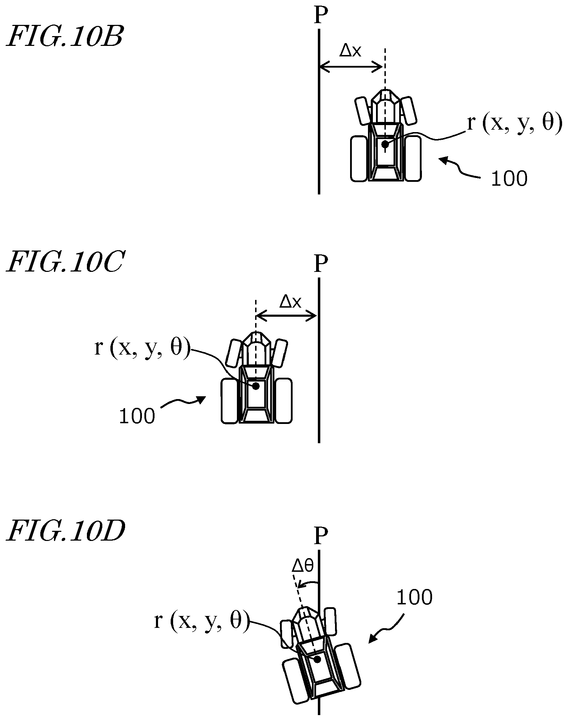

FIG. **10A** is a diagram showing an example of an agricultural machine **300** that travels along a target path **P.** FIG. **10B** is a diagram showing an example of an agricultural machine **300** at a position which is shifted rightward from the target path **P.** FIG. **10C** is a diagram showing an example of an agricultural machine **300** at a position which is shifted leftward from the target path **P.** FIG. **10D** is a diagram showing an example of an agricultural machine **300** which is oriented in an inclined direction with respect to the target path **P.** In these figures, the pose, i.e., the position and orientation, of the agricultural machine **300** as measured by the positioning device **130** is expressed as r(x,y,θ). Herein, (x,y) are coordinates representing the position of a reference point on the agricultural machine **300,** in an XY coordinate system which is a two-dimensional coordinate system being fixed to the globe. In the examples shown in FIGS. **10A** to **10D****,** the reference point on the agricultural machine **300** is at a position on the cabin where a GNSS antenna is located, but the reference point may be at any arbitrary position. θ is an angle representing the measured orientation of the agricultural machine **300.** Although the target path **P** is shown parallel to the Y axis in the examples illustrated in these figures, generally speaking, the target path **P** may not necessarily be parallel to the Y axis.

As shown in FIG. **10A****,** in the case where the position and orientation of the agricultural machine **300** are not deviated from the target path **P**, the controller **180** maintains the steering angle and speed of the agricultural machine **300** without changing them.

As shown in FIG. **10B****,** when the position of the agricultural machine **300** is shifted rightward from the target path **P**, the controller **180** changes the steering angle so that the traveling direction of the agricultural machine **300** will be inclined leftward, thus bringing the agricultural machine **300** closer to the path **P.** Herein, not only the steering angle but also the speed may be changed. The magnitude of the steering angle may be adjusted in accordance with the magnitude of a positional deviation Δx, for example.

As shown in FIG. **10C****,** when the position of the agricultural machine **300** is shifted leftward from the target path **P**, the controller **180** changes the steering angle so that the traveling direction of the agricultural machine **300** will be inclined rightward, thus bringing the agricultural machine **300** closer to the path **P.** In this case, too, not only the steering angle but also the speed may be changed. The amount of change of the steering angle may be adjusted in accordance with the magnitude of the positional deviation Δx, for example.

As shown in FIG. **10D**, in the case where the position of the agricultural machine **300** is not considerably deviated from the target path **P** but its orientation is nonetheless different from the direction of the target path **P**, the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the agricultural machine **300** to return to the path **P**, so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the agricultural machine **300,** control techniques such as PID control or MPC (Model Predictive Control) may be applied. Applying these control techniques will achieve smoothness of the control of bringing the agricultural machine **300** closer to the target path **P.**

Note that, when an obstacle is detected by one or more obstacle sensors **136** during travel, the controller **180** halts the agricultural machine **300.** Alternatively, when an obstacle is detected, the controller **180** may control the drive device **140** so as to avoid the obstacle. The controller **180** may also detect objects (e.g., other vehicles, pedestrians, etc.) that are located at relatively distant positions from the agricultural machine **300,** based on the sensor data which is output from the LiDAR sensor **156.** By performing speed control and steering control so as to avoid the detected objects, the controller **180** achieves self-traveling on public roads.

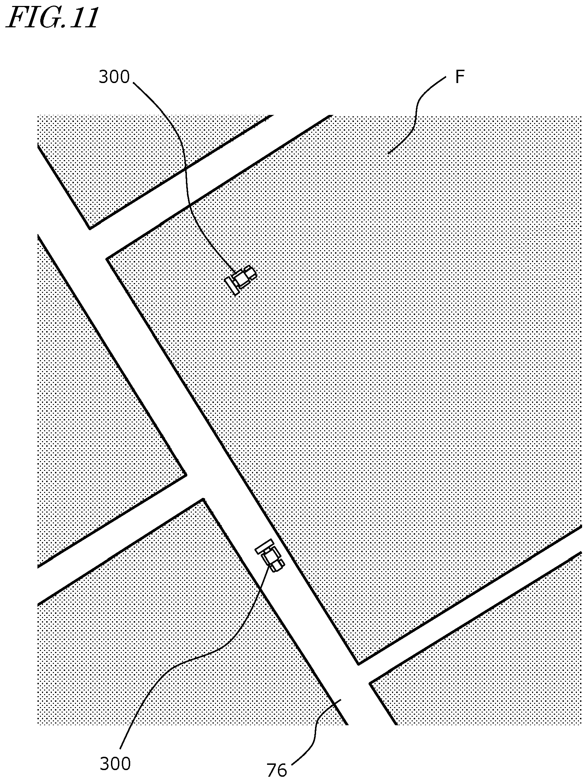

In the present embodiment, the agricultural machine **300** is able to automatically travel inside the field and outside the field in an unmanned manner. FIG. **11** is a diagram schematically showing an example situation where a plurality of agricultural machines **300** are self-traveling inside a field **F** and on a road **76** outside the field **F.** In the storage device **170,** an environment map of the inside of the field and the outside of the field including public roads and information of target paths is recorded. The environment map and target paths are generated by the ECU **185** of the controller **180,** for example. When the agricultural machine **300** travels on a public road, the agricultural machine **300** travels along a target path while sensing the surroundings by using sensing devices such as the cameras **155** and the LiDAR sensor **156,** with the implement **400** raised. During travel, the target path may be changed depending on the situation.

### [4. generation of task schedule]

An agricultural machine **300** according to the present embodiment automatically performs movement between fields and the agricultural task for each field, in accordance with a task schedule that is recorded in a storage device that is mounted on the agricultural machine **300.** The task schedule includes information on a plurality of agricultural tasks to be performed over a number of work days. Specifically, the task schedule may be a database that includes information indicating which agricultural task is to be performed by which agricultural machine at which point of time and in which field for each work day. Based on information that is input by the user by using the terminal apparatus **200,** the task schedule may be generated by the processor **21** of the server **100.** Hereinafter, an example method of generating the task schedule will be described.

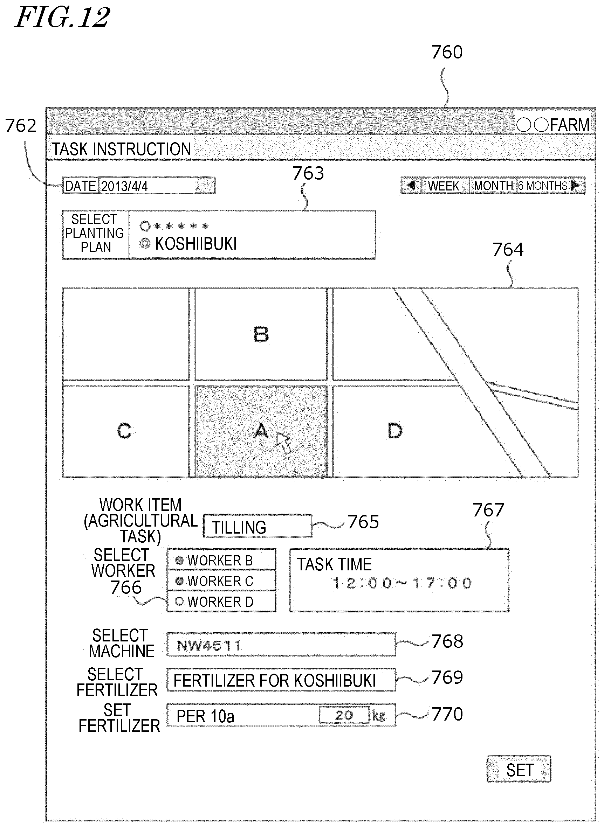

FIG. **12** is a diagram showing an example of a setting screen **760** that is displayed on the display device **220** of the terminal apparatus **200.** In accordance with the user's manipulation by using the input device **210,** the processor **230** of the terminal apparatus **200** activates an application for schedule generation to cause the setting screen **760** as shown in FIG. **12** on the display device **220.** On this setting screen **760,** the user is able to input information that is necessary for generating the task schedule.

FIG. **12** shows an example of the setting screen **760** in a case where tilling, including spreading of a fertilizer, is performed as an agricultural task in a field for rice cultivation. Without being limited to what is illustrated in the figure, the setting screen **760** may be modified as appropriate. The setting screen **760** in the example of FIG. **12** includes a date setting section **762,** a planting plan selecting section **763,** a field selecting section **764,** a task selecting section **765,** a worker selecting section **766,** a time setting section **767,** a machine selecting section **768,** a fertilizer selecting section **769,** and an application amount setting section **770.**

In the date setting section **762,** a date that has been input with the input device **210** is displayed. The input date is set as a date for performing the agricultural task.

In the planting plan selecting section **763,** a list of names of planting plans that was previously created is displayed. The user can select a desired planting plan from this list. The planting plan is previously generated for each kind or cultivar of crop, and recorded in the storage device **30** of the server **100.** The planting plan is a plan as to which crop is to be planted in which field. The planting plan is made by an administrator who manages the plurality of fields, etc., prior to planting a crop in a field. The field is a partitioned agricultural field in which crops are to be planted (i.e., grown). In the example of FIG. **4****,** a planting plan for "Koshiibuki", which is a cultivar of rice plant, is selected. In this case, the content to be set on the setting screen **760** is associated with the planting plan for "Koshiibuki".

In the field selecting section **764,** fields in the environment map are displayed. The user can select any field from among the displayed fields. In the example of FIG. **12****,** a portion indicating "field A" is selected. In this case, the selected "field A" is set as the field in which an agricultural task is to be performed.

In the task selecting section **765,** a plurality of agricultural tasks that are needed in order to cultivate the selected crop are displayed. The user can select one of the plurality of agricultural tasks. In the example of FIG. **12****,** "tilling" is selected from among the plurality of agricultural tasks. In this case, the selected "tilling" is set as the agricultural task to be performed.

In the worker selecting section **766**, previously-registered workers are displayed. The user can select one or more workers from among the plurality of displayed workers. In the example of FIG. **12****,** from among the plurality of workers, "worker B, worker C" are selected. In this case, the selected "worker B, worker C" are set as the workers to perform or manage the given agricultural task. In the present embodiment, because the agricultural machine automatically performs the agricultural task, the worker may not actually perform the agricultural task, but only remotely monitor the agricultural task being performed by the agricultural machine.

In the time setting section **767,** a task time that is input via the input device **210** is displayed. The task time is designated by a start time and an end time. The input task time is set as a scheduled time at which the agricultural task is to be performed.

The machine selecting section **768** is a portion for setting the agricultural machine to be used for the given agricultural task. In the machine selecting section **768,** for example, the IDs (identification information) and types or models of the agricultural machines which have been previously registered by the server **100,** types or models of usable implements, etc., may be displayed. The user can select a specific machine from among the indicated machines. In the example of FIG. **12****,** an implement model "NW4511" is selected. In this case, this implement is set as the machine to be used for the given agricultural task.

In the fertilizer selecting section **769,** names of a plurality of fertilizers which have been previously registered by the server **100** may be displayed. The user can select a specific fertilizer from among the indicated plurality of fertilizers. The selected fertilizer is set as the fertilizer to be used for the given agricultural task.

In the application amount setting section **770,** a numerical value that is input via the input device **210** is displayed. The input numerical value is set as an application amount.

Once a planting plan, a field, an agricultural task, a worker, a task time, a fertilizer, and an application amount are input in the setting screen **760** and "SET" is selected, the communicator **270** of the terminal apparatus **200** transmits the input information to the server **100.** The processor **21** of the server **100** stores the received information to the storage device **30.** Based on the received information, the processor **21** generates a schedule of agricultural tasks to be performed by each agricultural machine, and stores it to the storage device **30.**

Note that the information of agricultural tasks to be managed by the server **100** is not limited to what is described above. For example, an ability to set the kind and application amount of an agrochemical to be used for the field on the setting screen **760** may be provided. An ability to set information on agricultural tasks other than the agricultural task shown in FIG. **12** may be provided.

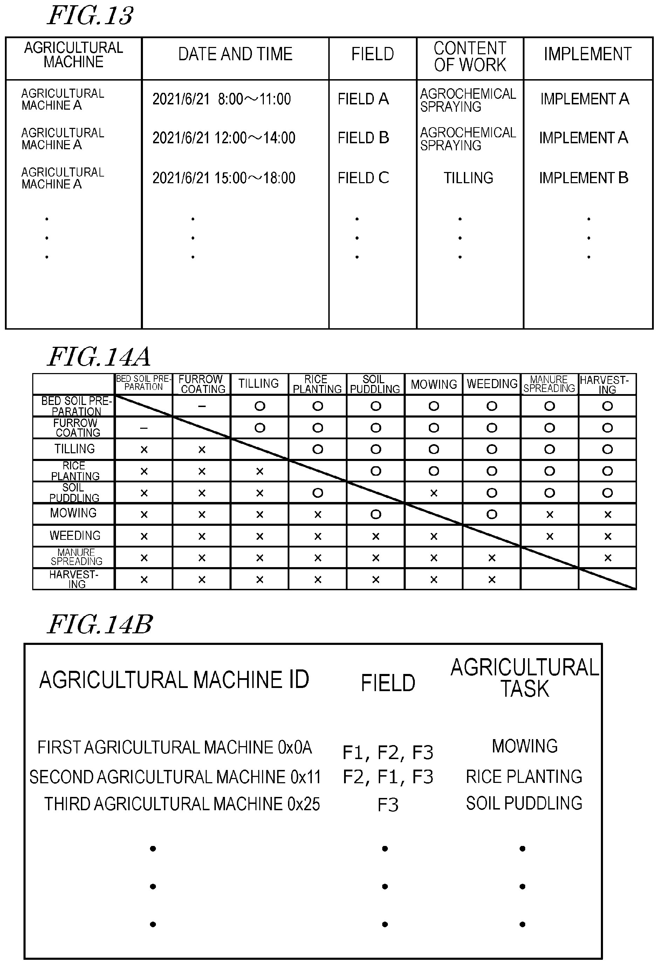

FIG. **13** is a diagram showing an example of a schedule of agricultural tasks to be generated by the server **100.** The schedule in this example includes, for each registered agricultural machine, information indicating the date and time at which the agricultural task is to be performed, the field, the content of work, and the implement used. Other than the information shown in FIG. **13****,** depending on the content of work, the schedule may include information on an agrochemical or the application amount of an agrochemical, etc., for example. In accordance with such a schedule, the processor **21** of the server **100** instructs the agricultural machine **300** as to an agricultural task. The schedule is downloaded by the controller of the agricultural machine **300,** and may be stored also to the storage device of the agricultural machine **300.** In that case, the controller of the agricultural machine **300** may spontaneously begin operation in accordance with the schedule stored in the storage device.

### [5. priority levels of agricultural machines]

A plurality of agricultural machines **300** according to the present embodiment have non-overlapping and unique agricultural machine IDs and priority levels given thereto. For each agricultural machine, the priority level according to the present embodiment is assigned in accordance with the kind of agricultural task to be performed by the agricultural machine. Hereinafter, a priority level that is assigned to each agricultural machine may be referred to as "the priority level of the agricultural machine". Unlike the agricultural machine IDs, the priority levels may overlap among the plurality of agricultural machines. The kind of agricultural task may also be expressed as an item of agricultural work. Example kinds of agricultural tasks include, in the case of rice cultivation: bed soil preparation, furrow coating, tilling, seeding, rice planting, soil puddling, mowing, ditching, weeding, manure spreading, harvesting, etc., and in the case of field cropping, ridge making, settled planting, weeding, intertillage ridging, harvesting, etc.

FIG. **14A** is a diagram showing an example relationship between agricultural tasks and priority levels. In FIG. **14A****,** "0" means that an agricultural task indicated in a row item has a higher priority level than the priority level of an agricultural task indicated in a column item. "×" indicates that an agricultural task indicated in a row item has a lower priority level than the priority level of an agricultural task indicated in a column item. "-" means that the priority level of an agricultural task indicated in a row item is equal to the priority level of an agricultural task indicated in a column item. In the illustrated relationship, for example, the priority level of bed soil preparation is equal to the priority level of furrow coating, and higher than the priority levels of the rest, i.e., tilling, rice planting, soil puddling, mowing, weeding, manure spreading, harvesting. The priority level of tilling is lower than the priority levels of bed soil preparation and furrow coating, but is higher than the priority levels of rice planting, soil puddling, mowing, weeding, manure spreading, and harvesting. Without being limited to the illustrated example, for example, the administrator may determine or change the relationship between agricultural tasks and priority levels as appropriate. By using the terminal apparatus **200,** the administrator can transmit information of the determined or changed relationship between agricultural tasks and priority levels to the server **100.** At the server **100,** a table that associates a relationship between agricultural tasks and priority levels is generated, and stored to the storage device **30.**

FIG. **14B** is a diagram showing another example of a schedule of agricultural tasks that is generated by the server **100.** A schedule of agricultural tasks according to the present embodiment includes information of agricultural machine IDs for identifying agricultural machines. As described above, the user can use the terminal apparatus **200** to associate agricultural machine IDs with the task schedule. FIG. **14B** shows an example of a table that associates, for each agricultural machine **300,** an agricultural machine ID, a field to be worked on for the day, and the content of work. This table is stored to the storage device **30,** for example. In the exemplary table, the first agricultural machine (ID: 0x0A) is scheduled to perform the mowing task in the order of fields F1, F2 and F3. The second agricultural machine (ID: 0x11) is scheduled to perform the rice planting task in the order of fields F2, F1 and F3. The third agricultural machine (ID: 0x25) is scheduled to perform the soil puddling task in field F3. Note that 0x signifies a hexadecimal notation.

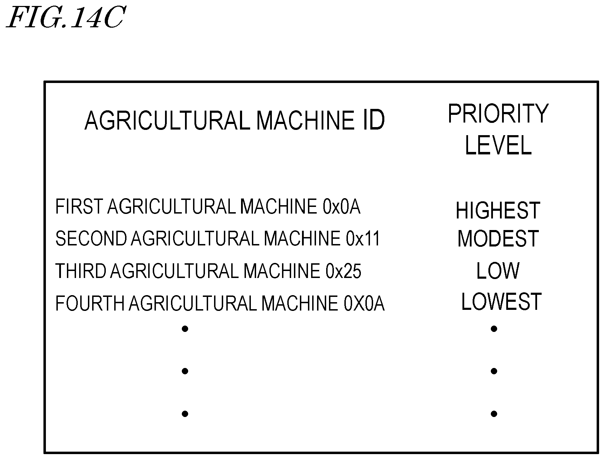

FIG. **14C** is a diagram showing an example of a table that associates agricultural machine IDs and the priority levels of agricultural machines. In the aforementioned example, relative priority levels are determined based on the content of the agricultural task; however, it may be possible to assign one of the five priority levels of "HIGHEST", "HIGH", "MODEST", "LOW", "LOWEST" to each agricultural machine **300** in accordance with the content of its agricultural task, for example. In the illustrated exemplary table, "HIGHEST" is assigned to the first agricultural machine; "MODEST" is assigned to the second agricultural machine; "LOW" is assigned to the third agricultural machine; and "LOWEST" is assigned to the fourth agricultural machine.

While referring to the table mapping the relationship between agricultural tasks and priority levels, in accordance with the task schedule, the processing unit **20** of the server **100** according to the present embodiment may determine a field in which the agricultural machine **300** is to perform an agricultural task next, instruct the agricultural machine **300** to move to the determined field, or cause the agricultural machine working in the field to stop its task and instruct it to exit the field, thereby managing access to the field. Under the management of access to the field by the processing unit **20,** the controller **180** of the agricultural machine **300** realizes self-traveling of the agricultural machine **300.**

### [6. operation of management system]

### (6.1. overview of method of managing access to the field)

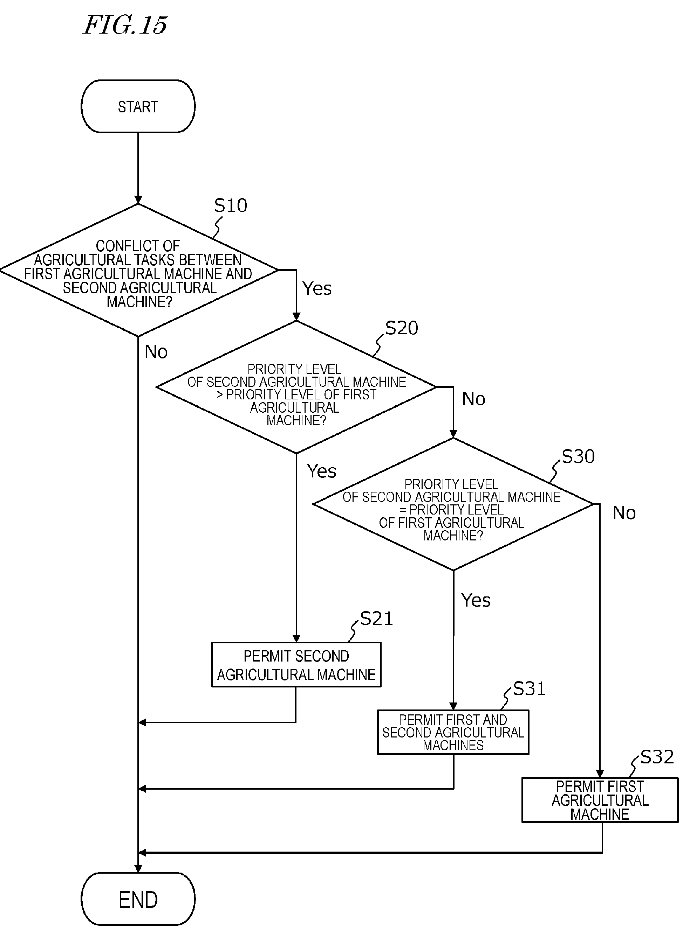

A method of managing access to a field according to the present embodiment is implemented in the processing unit **20** of the server **100.** FIG. **15** is a flowchart illustrating the procedure of the method of managing access to a field. While the first agricultural machine **300A** is performing a task in field F1, if a conflict of tasks for field F1 exists between the first agricultural machine **300A** and the second agricultural machine **300B** (step **S10**), the processing unit **20** allows at least one of the first agricultural machine **300A** and the second agricultural machine **300B** that is determined based on priority data to perform the task for field F1.

If the priority level of the second agricultural machine **300B** is higher than the priority level of the first agricultural machine **300A** (Yes from step **S20**), the processing unit **20** allows its second agricultural machine **300B** to perform the agricultural task for field F1 (step **S21**). If the priority level of the second agricultural machine **300B** is not higher than the priority level of the first agricultural machine **300A** (No from step **S20**) and the priority level of the second agricultural machine **300B** and the priority level of the first agricultural machine **300A** are equal (Yes from step **S30**), the processing unit **20** allows the first agricultural machine **300A** and the second agricultural machine **300B** to perform their agricultural tasks for field F1 (step **S31**). If the priority level of the second agricultural machine **300B** is lower than the priority level of the first agricultural machine **300A** (No from step **S30**), the processing unit **20** allows the first agricultural machine **300A** to perform its agricultural task for field F1 (step **S32**).

### (6.2. operation of processing unit)

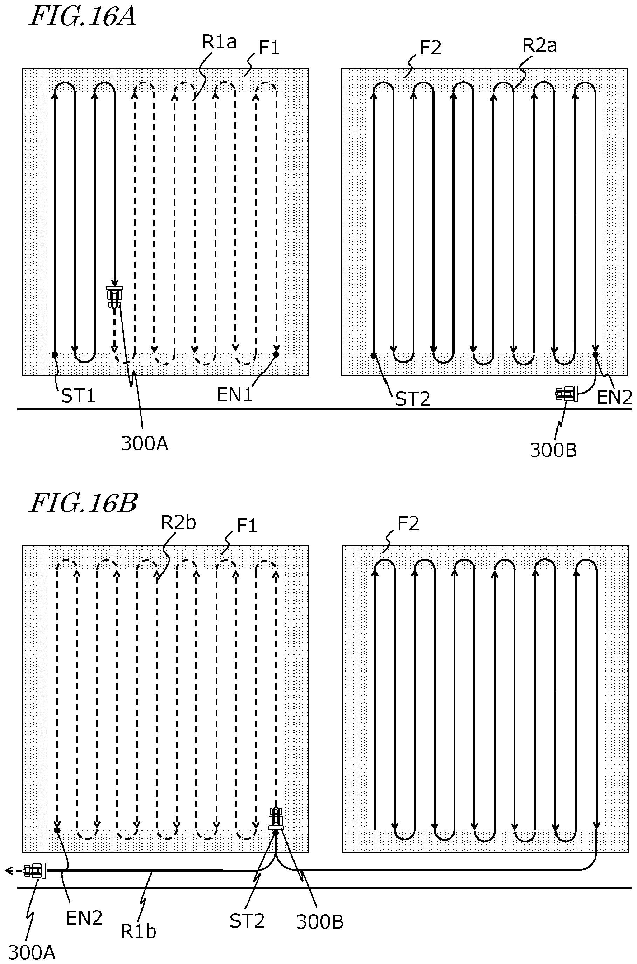

Next, with reference to FIGS. **16A** to **19C****,** an example operation of the server **100** (mainly the processing unit **20**) and the agricultural machine **300** will be described. A plurality of agricultural machines **300** that are connected to the management system **1000** described below include a first agricultural machine **300A** and a second agricultural machine **300B.** However, the plurality of agricultural machines **300** may include three or more agricultural machines.

The first agricultural machine **300A** and the second agricultural machine **300B** according to the present embodiment travel via self-driving on a road from a storage location to the field or a road from the field to another field, and also automatically perform tasks within the field, for example. Note that the first agricultural machine **300A** and the second agricultural machine **300B** may move via manual driving from the field to another field in which to perform work next, and perform their work in the field via manual operation of the driver. The storage location may be a barn at the owner's home of the agricultural machines, or a garage of an office of the farm manager, for example. The agricultural machines may be stored in a locked storage location.

In the case where the first agricultural machine **300A** and the second agricultural machine **300B** each perform self-driving, a target path for moving between the fields and/or a target path for performing agricultural work while moving within the field may be generated manually or automatically before self-driving is begun. Once the target path is determined, the first agricultural machine **300A** and the second agricultural machine **300B** each automatically travel along the target path. In the case where the agricultural machine **300** travels along a public road, the agricultural machine **300** may travel along the target path while sensing the surroundings by using sensing devices such as the cameras and the LiDAR sensor, with the implement raised.

FIGS. **16A** and **16B** are diagrams for describing a method of managing access to a field **F1** according to a first example. FIG. **16A** illustrates a state in which the second agricultural machine **300B** has finished its task for a field **F2** according to the task schedule shown in FIG. **14B** and is standing by for access to the field **F1.** A target path **R1a** in the field **F1** of the first agricultural machine **300A** is shown with broken-line arrows, whereas a target path that has already been traveled is indicated by solid lines. A target path **R2a** within the field **F2** for the second agricultural machine **300B** having finished its task is indicated by solid-line arrows. The target path **R1a** includes a start point **ST1** of beginning work, an end point **EN1** of ending work, and traveling directions as indicated by arrows in the figure. Similarly, the target path **R2a** includes a start point **ST2** of beginning work, an end point **EN2** of ending work, and traveling directions as indicated by arrows in the figure. FIG. **16B** illustrates a state in which the first agricultural machine **300A** has exited the field **F1,** and in which the second agricultural machine **300B** which has been permitted access to the field **F1** has moved to the field **F1** to begin work. Although the figures illustrate two adjacent fields **F1** and **F2** for simplicity, the fields **F1** and **F2** may be located at places which are physically remote but which allow the agricultural machines to move.

By referring to the table mapping the relationship between agricultural tasks and priority levels and the schedule of agricultural tasks, the processing unit **20** compares between the priority level of the first agricultural machine **300A** and the priority level of the second agricultural machine **300B.** If the priority level of the second agricultural machine **300B** is higher than the priority level of the first agricultural machine **300A,** the processing unit **20** allows the second agricultural machine **300B** to perform the task for the field **F1** with priority over the first agricultural machine **300A.** According to the task schedule illustrated in FIG. **14B****,** the first agricultural machine **300A** is performing a mowing task in the field **F1.** In the meantime, the second agricultural machine **300B** may have finished the rice planting task for the field **F2** earlier than is scheduled and moved to the next field **F1,** and be beginning to perform a rice planting task. As a result of this, a conflict of tasks for the field **F1** occurs between the first agricultural machine **300A** and the second agricultural machine **300B.** In this case, by referring to the table mapping the relationship between agricultural tasks and priority levels as illustrated in FIG. **14A****,** the processing unit **20** determines that the priority level of the rice planting task of the second agricultural machine **300B** is higher than the priority level of mowing of the first agricultural machine **300A.** Because the priority level of the second agricultural machine **300B** is higher than the priority level of the first agricultural machine **300A,** the processing unit **20** causes the first agricultural machine **300A** to stop the task for the field **F1,** and instead allows the second agricultural machine **300B** to perform the task for the field **F1.** When causing the first agricultural machine **300A** to stop the task for the field **F1,** the processing unit **20** may further cause the first agricultural machine **300A** to exit the field **F1.** If the priority level of the second agricultural machine **300B** is lower than the priority level of the first agricultural machine, the processing unit **20** does not permit the second agricultural machine **300B** to perform its task for the field **F1.** The first agricultural machine **300A** can continue its task for the field **F1.**

In one example, when permitting the second agricultural machine **300B** access to the field **F1,** the processing unit **20** may transmit positional information of the field **F1** to the controller **180** of the second agricultural machine **300B.** Based on the received positional information of the field **F1,** the controller **180** of the second agricultural machine **300B** may generate a target path from the field **F2** to the field **F1** and a target path for allowing the second agricultural machine **300B** to perform an agricultural task in the field **F1.** This allows the second agricultural machine **300B** to travel or move along the target path. Moreover, when causing the first agricultural machine **300A** to exit the field **F1,** the processing unit **20** may update the schedule of tasks to be performed by the first agricultural machine **300A,** or generate a target path for the first agricultural machine **300A** to move to the next destination. In FIG. **16B****,** a target path **R2b** for the second agricultural machine **300B** to perform work in the field **F1** is shown by broken-line arrows, whereas a target path **R1b** for the first agricultural machine **300A** to move to the next destination via self-driving is shown by broken-line arrows.

As shown in FIG. **16A****,** before a conflict of tasks for the field **F1** occurs between the first agricultural machine **300A** and the second agricultural machine **300B,** the target path **R1a** of the first agricultural machine **300A** is set in the field **F1.** On the other hand, as shown in FIG. **16B****,** after the processing unit **20** has permitted the second agricultural machine **300B** access to the field F1, the target path **R2b** of the second agricultural machine **300B** is set in the field **F1.** The controller **180** of the second agricultural machine **300B** may acquire the target path **R1a** of the first agricultural machine **300A** via the server **100.** The controller **180** of the second agricultural machine **300B** may generate the target path **R2b** by utilizing the target path **R1a.** For example, the controller **180** of the second agricultural machine **300B** may generate the target path **R2b** by: setting the end point **EN2** of the target path **R1a** as the start point **ST2** of the target path **R2b;** setting the start point **ST1** of the target path **R1a** as the end point **EN2** of the target path **R2b;** and reversing the traveling direction. Moreover, when the processing unit **20** causes the first agricultural machine **300A** to exit the field, the controller **180** of the first agricultural machine **300A** may change the target path **R1a** to the target path **R1b.**

The processing unit **20** according to an aspect of the present disclosure performs centralized management of the schedule of tasks to be respectively performed by the plurality of agricultural machines **300,** and monitors the progress of work of each agricultural machine **300.** From the progress of work of the second agricultural machine **300B,** the processing unit **20** can determine whether the second agricultural machine **300B** has finished its task for the field **F2** or not. Based on the aforementioned task schedule, the processing unit **20** determines the next field for the second agricultural machine **300B** to work. If the processing unit **20** tries to allow the second agricultural machine **300B** to work in the field **F1** while the first agricultural machine **300A** is performing work in the field **F1,** a conflict of tasks for the field **F1** occurs between the first agricultural machine **300A** and the second agricultural machine **300B.** In that case, while referring to the table mapping the relationship between agricultural tasks and priority levels, the processing unit **20** can determine the agricultural machine to work in the field **F1** based on its priority level.

The processing unit **20** according to another aspect of the present disclosure functions as an arbitration circuit to perform an arbitration process in response to a request from each agricultural machine **300.** When performing an agricultural task via self-driving, the agricultural machine **300** may generate log data including information such as a start point and an end point of the agricultural task for the field and a trajectory that is obtained by actually moving along the target path. Based on the generated log data, the agricultural machine **300** can autonomously determine whether the task for the field has been finished or not. For example, upon autonomously determining that the task for the field **F2** has been finished, the second agricultural machine **300B** may notify the processing unit **20** of the completion of the agricultural task. This notification serves as a request for the processing unit **20** to determine a next field for the agricultural machine **300** to work according to the task schedule. When a conflict of agricultural tasks for the field exists between two or more agricultural machines **300,** the processing unit **20** may determine an agricultural machine to work in the field by referring to the table mapping the relationship between agricultural tasks and priority levels.

After the task for the other field **F2,** which is distinct from the field **F1,** the second agricultural machine **300B** may transmit a notification of completion of the task or a request to the processing unit **20,** for example. However, the second agricultural machine **300B** may transmit a request for agricultural work for the field to the processing unit **20** from a place that is distinct from the field, e.g., a storage location of the farmer.

The method of managing access to a field according to the present embodiment is applicable not only to an agricultural machine that moves via self-driving, but also to an agricultural machine that moves via manual driving. For example, when an agricultural worker is manually manipulating an agricultural machine to perform an agricultural task, the processing unit **20** may follow the method of managing according to the present embodiment to determine a field in which the agricultural machine is to perform an agricultural task next, in response to a notification of completion of the task from the operational terminal **153** or terminal apparatus **200** used by that agricultural worker. The processing unit **20** may transmit positional information of the determined field to the operational terminal **153** or the terminal apparatus **200** used by the agricultural worker, cause it to be displayed on the display of the operational terminal **153** or the terminal apparatus **200,** and urge the agricultural worker to move to the determined field.

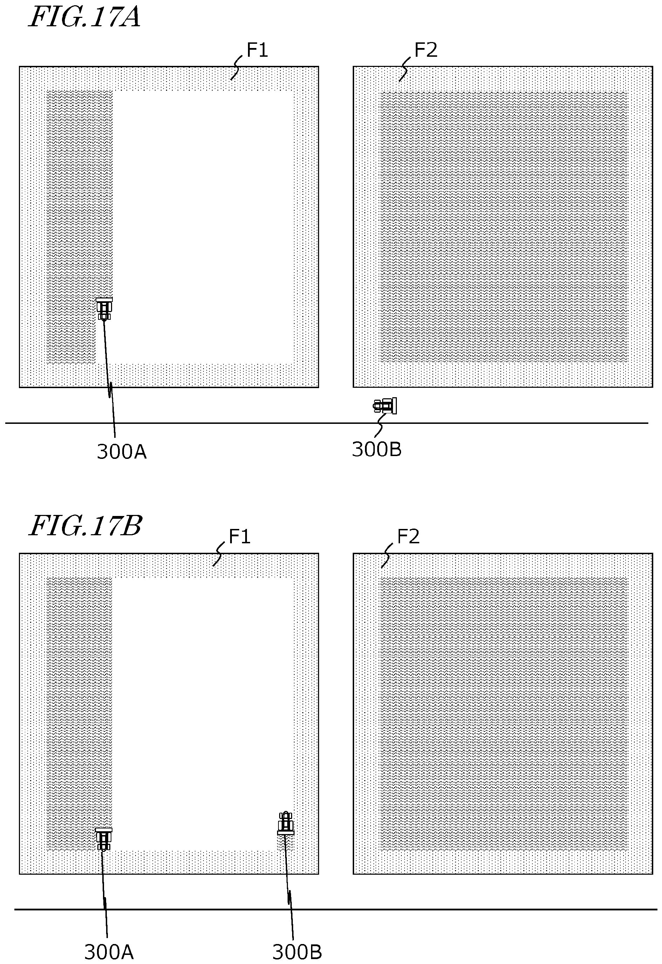

FIGS. **17A** and **17B** are diagrams for describing a method of managing access to the field **F1** according to a second example. FIG. **17A** illustrates a state in which the second agricultural machine **300B** has finished its task for the field **F2** and is standing by for access to the field **F1.** FIG. **17B** illustrates a state in which the second agricultural machine **300B** having been permitted access to the field **F1** has moved to the field **F1** to begin work.

When the first agricultural machine **300A** is performing a task in the field **F1,** a conflict of tasks for the field **F1** may occur between the first agricultural machine **300A** and the second agricultural machine **300B.** By referring to the table mapping the relationship between agricultural tasks and priority levels, the processing unit **20** compares between the priority level of the first agricultural machine **300A** and the priority level of the second agricultural machine **300B.** If the priority level of the first agricultural machine **300A** and the priority level of the second agricultural machine **300B** are equal, the processing unit **20** allows the first agricultural machine **300A** to continue its task for the field **F1,** and allows the second agricultural machine **300B** to perform its task for the field **F1.** In the example shown in FIG. **14A****,** the priority levels of bed soil preparation and furrow coating are equal. Through orchestrated work of the first agricultural machine **300A** and the second agricultural machine **300B,** tasks for the field **F1** can be accelerated.

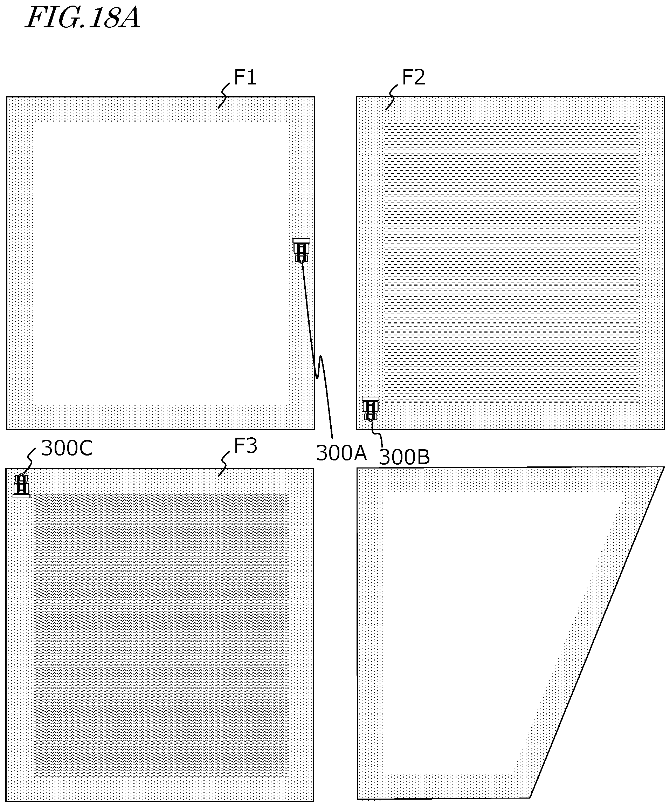

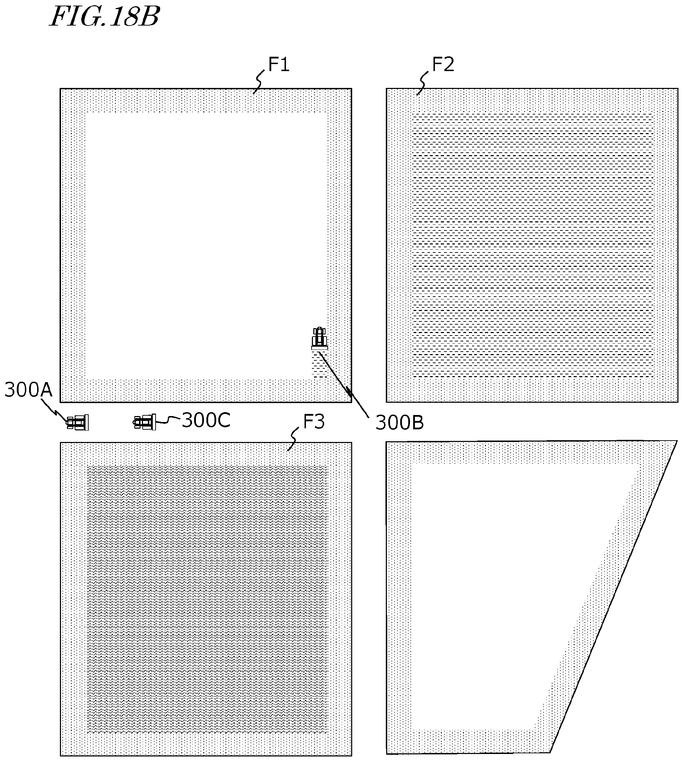

The plurality of agricultural machines **300** may further include a third agricultural machine **300C.** FIGS. **18A** and **18B** are diagrams for describing a method of managing access to the field **F1** according to a third example. FIG. **18A** illustrates a state in which the second agricultural machine **300B** and the third agricultural machine **300C** have finished their tasks and are standing by for access to the field **F1.** FIG. **18B** illustrates a state in which the second agricultural machine **300B** having been permitted access to the field **F1** has moved to the field **F1** to begin work.

As illustrated in FIG. **18A****,** after the second agricultural machine **300B** has finished its task for the field **F2** and the third agricultural machine **300C** has finished its task for the field **F3,** a conflict of agricultural tasks for the field **F1** may occur between the first agricultural machine **300A,** the second agricultural machine **300B,** and the third agricultural machine **300C.** Assuming that the priority level of the second agricultural machine **300B** is the highest among the three agricultural machines, as illustrated in FIG. **18B****,** the processing unit **20** first causes the first agricultural machine **300A** to exit the field **F1,** and thereafter allows the second agricultural machine **300B** to move from the field **F2** to the field **F1** and begin its agricultural task for the field **F1.** The processing unit **20** does not permit the third agricultural machine **300C** the agricultural task for the field **F1.** Instead, the processing unit **20** may cause the third agricultural machine **300C** to move to another field distinct from the fields **F1** and **F2** and perform an agricultural task in the field.

The management system **1000** according to the present embodiment may manage access of four or more agricultural machines to a field. In this case, too, if a conflict of access to the field exists between the four or more agricultural machines, the processing unit **20** may allow the agricultural machine of the highest priority level among the four or more agricultural machines to perform its agricultural task for the field with priority.

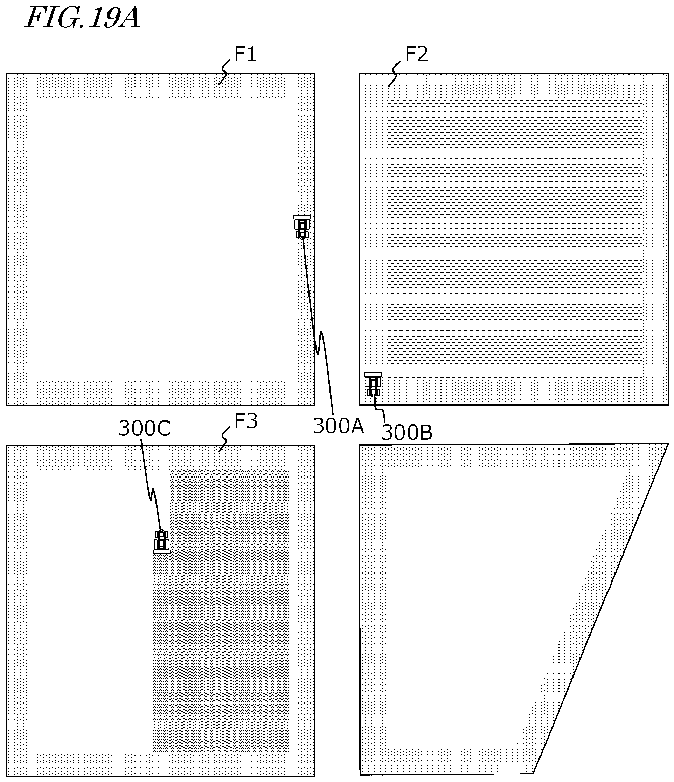

FIG. **19A** to FIG. **19C** are diagrams for describing a method of managing access to the field **F1** according to a fourth example. In the illustrated example, it is assumed that: the first agricultural machine **300A** is performing a mowing task in the field **F1;** the second agricultural machine **300B** is performing a rice planting task in the field **F2;** and the third agricultural machine **300C** is performing a soil puddling task in the field **F3.**

The task schedule illustrated in FIG. **14B** will be considered. For example, while the first agricultural machine **300A** is performing the mowing task in the field **F1,** the second agricultural machine **300B** may finish the rice planting task earlier than is scheduled in the field **F2** and transmit a notification of completion of the task to the processing unit **20.** Upon receiving the notification of completion of the task from the second agricultural machine **300B,** the processing unit **20** permits the second agricultural machine **300B** (as has been determined by referring to the table mapping the relationship between agricultural tasks and priority levels) the rice planting task for the field **F1.** The processing unit **20** causes the first agricultural machine **300A** to stop its mowing task for the field **F1** and exit the field **F1.** Thereafter, the processing unit **20** causes the second agricultural machine **300B** to move from the field **F2** to **F1,** and allows it to perform the rice planting task in the field **F1.**

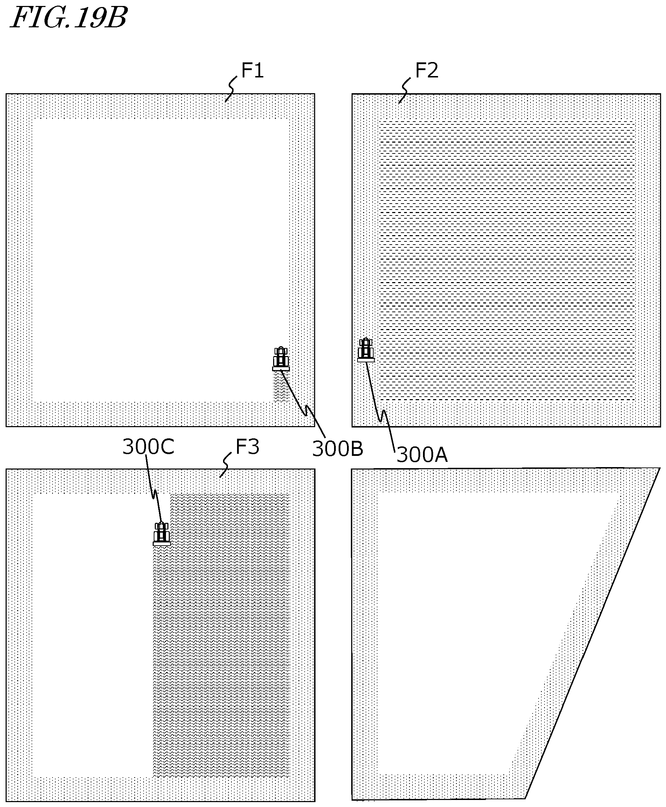

As illustrated in FIG. **19B****,** the processing unit **20** may cause the first agricultural machine **300A** to move from the field **F1** to the vacant field **F2** after being exited by the second agricultural machine **300B,** and allow it to perform the mowing task in the field **F2.** In this case, because there is no conflict of access to the field **F3,** the processing unit **20** may allow the third agricultural machine **300C** to continue the soil puddling task in the field **F3.**

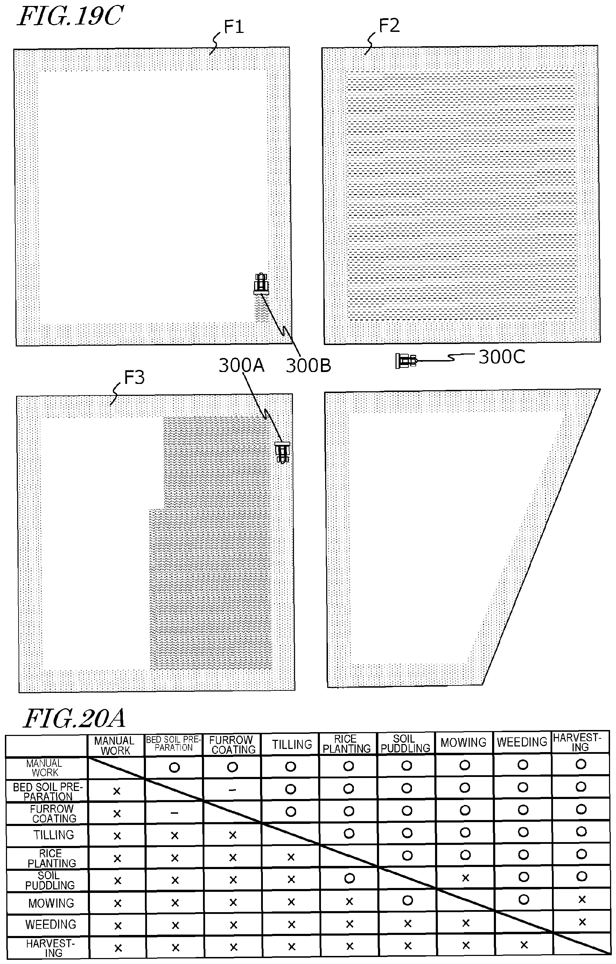

In another example, the first agricultural machine **300A** may be scheduled to perform the mowing task in the field **F3,** next to the field **F1.** In that case, if the processing unit **20** causes the first agricultural machine **300A** to move from the field **F1** to the field **F3** and allows it to perform its agricultural task, a conflict of access to the field **F3** will occur between the first agricultural machine **300A** and the third agricultural machine **300C** performing its soil puddling task in the field **F3.** As illustrated in FIG. **19C****,** the processing unit **20** permits the first agricultural machine **300A** (as has been determined by referring to the table mapping the relationship between agricultural tasks and priority levels) the mowing task for the field **F3.** The processing unit **20** causes the third agricultural machine **300C** to stop its soil puddling task for the field **F3** and exit the field **F3.** Thereafter, the processing unit **20** causes the first agricultural machine **300A** to move from the field **F1** to the field **F3,** and allows it to perform the mowing task in the field **F3.** The processing unit **20** may cause the third agricultural machine **300C** to move from the field **F3** to another field.

With the method of managing access to a field according to the present embodiment, while a plurality of agricultural machines are at work, even if a conflict of agricultural tasks for the field exists between two or more agricultural machines, the agricultural work as a whole can be efficiently promoted, without postponing tasks of high priority levels.

The management system **1000** according to the present embodiment is able to manage access to a field between an agricultural machine and an agricultural worker. While an agricultural worker is performing an agricultural task in a field, if a conflict of agricultural tasks for the field exists between the agricultural machine **300** and the agricultural worker, the processing unit **20** can decide to allow the agricultural worker to continue his or her agricultural task for the field with priority over the agricultural machine **300,** based on priority data, i.e., by referring to the table.

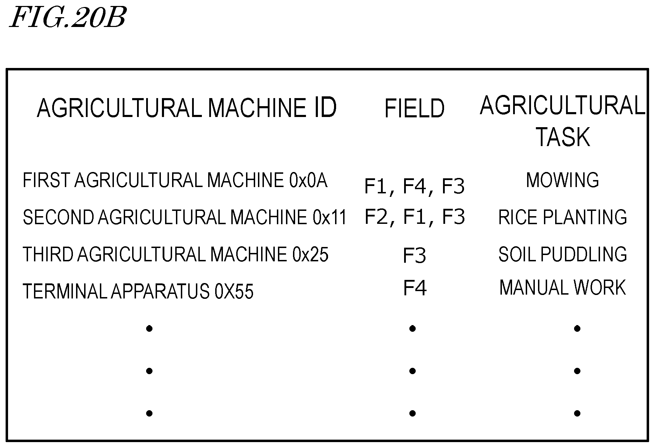

FIG. **20A** is a diagram showing an example relationship between agricultural tasks including manual work by an agricultural worker and priority levels. FIG. **20B** is a diagram showing an example of a schedule of agricultural tasks that is generated by the server **100.** In the table shown in FIG. **20A****,** the priority level of manual work by an agricultural worker is set to be higher than the priority level of any other agricultural task. The items for selection to be displayed in the task selecting section **765** of the setting screen **760** illustrated in FIG. **12** may include a manual work item by an agricultural worker. For example, when an agricultural worker is expected to perform manual work in the field, the administrator may select the manual work item from among the plurality of agricultural tasks.

The task schedule shown in FIG. **20B** associates identification information (terminal apparatus ID: 0x55) of the terminal apparatuses **200** to be used by an agricultural worker, fields, and agricultural tasks. As a result, a task schedule that includes not only agricultural machine tasks but also a schedule item of manual work by an agricultural worker is managed at the server **100.** By referring to the table that associates agricultural tasks and priority levels, the processing unit **20** can assign a high priority level to an agricultural worker performing manual work. Assigning a priority level to an agricultural worker corresponds, in effect, to assigning a priority level to the terminal apparatus **200** that is used by the agricultural worker.

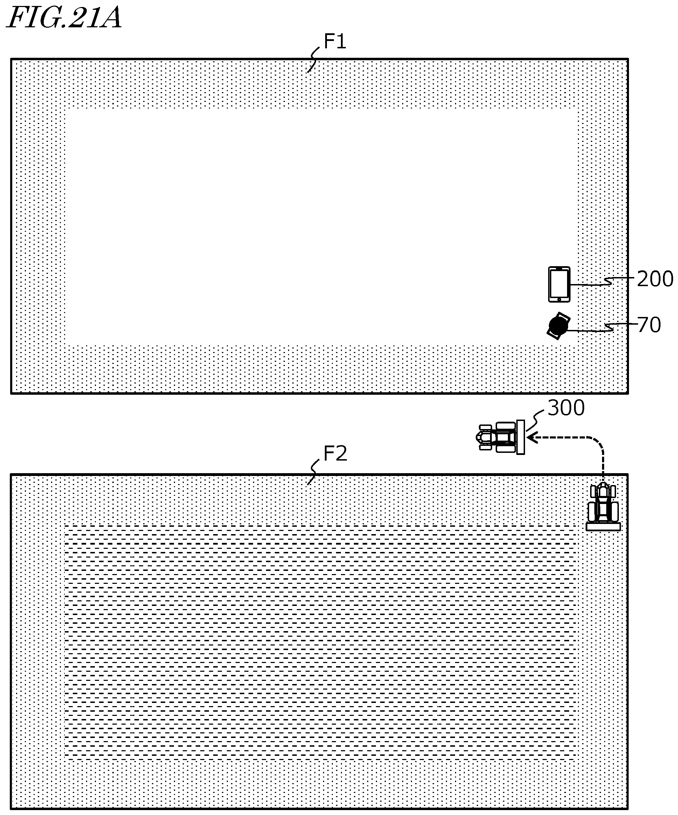

FIG. **21A** is a diagram schematically showing a state in which an agricultural worker **70** is performing an agricultural task in the field **F1.** In the field **F1** having been mowed by the agricultural machine **300,** the agricultural worker **70** may be performing a task of mowing the remaining harvest in a corner of the field **F1** by hand, while carrying the terminal apparatus **200.** When the agricultural worker **70** is performing work in the field **F1,** if a notification of completion of a task is received from the agricultural machine **300** having finished its task for the field **F2,** for example, the processing unit **20** may decide not to allow the agricultural machine **300** to perform its agricultural task for the field **F1,** by referring to the table that associates agricultural tasks and priority levels. As a result, without being interfered by the agricultural machine **300,** the agricultural worker **70** is able to continuously perform his or her agricultural task for the field **F1.** Based on the task schedule, the processing unit **20** may cause the agricultural machine **300** to move to another field distinct from the field **F1,** and allow it to perform the agricultural task in that field.

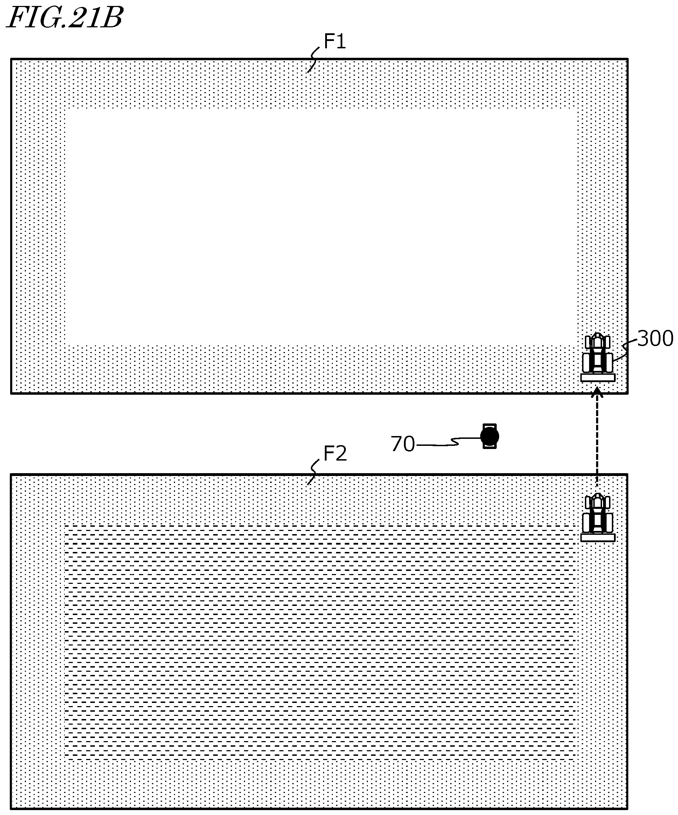

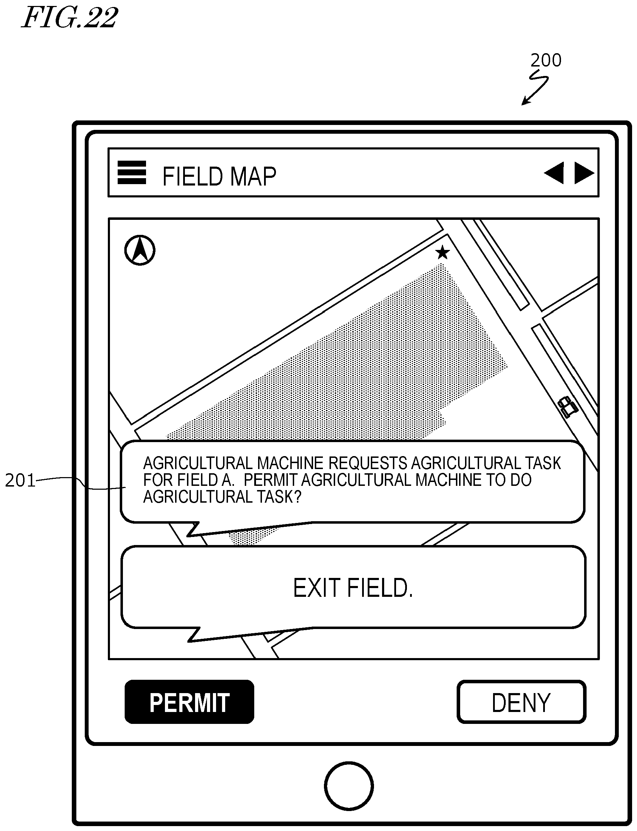

FIG. **21B** is a diagram for describing, when the agricultural worker **70** is performing an agricultural task in the field **F1,** urging the agricultural worker **70** to exit the field **F1** if a conflict of agricultural tasks exists with the agricultural machine **300.** FIG. **22** is a diagram showing an example indication for notifying the terminal apparatus **200** that the agricultural machine **300** is trying to access the field **F1.**

By taking the task schedule shown in FIG. **20B** for example, while the agricultural worker is performing manual work in the field **F4,** when the first agricultural machine **300A** finishes its task for the field **F1** and then is going to perform work in the field **F4,** a conflict of tasks may occur between the agricultural machine **300** and the agricultural worker **70.**

When the agricultural worker **70** is performing an agricultural task in the field **F1,** if a notification of completion of a task is received from the agricultural machine **300** having finished its agricultural task for the field **F2,** for example, the processing unit **20** may notify the terminal apparatus **200** being used by the agricultural worker **70** that the agricultural machine **300** is trying to access the field **F1.** FIG. **22** shows a pop-up **201** being indicated on the display of the terminal apparatus **200.** The agricultural worker **70** can be urged to exit the field **F1** with such a notification. Upon receiving this notification, the agricultural worker **70** may exit the field **F1** and concede the agricultural task for the field **F1** to the agricultural machine **300,** or deny the request from the agricultural machine and continue his or her agricultural task for the field **F1.** For example, if the task to be next performed by the agricultural machine **300** having been denied its request by the agricultural worker **70** has a high priority level, the processing unit **20** may cause the agricultural machine **300** to move to another field in accordance with the task schedule and allow it to perform its agricultural task.

Thus, by assigning a higher priority level to the agricultural worker **70** than to the agricultural machine **300,** the aforementioned method of managing access to a field becomes applicable to cases where a conflict of tasks exists between the agricultural machine **300** and the agricultural worker **70.** By relying on priority levels to permit the agricultural worker **70** a task with priority, it becomes possible to allow the agricultural worker **70** to continue his or her agricultural task without being interfered by the agricultural machine **300.**

A method of managing access of a plurality of agricultural machines to a field or access to a field between an agricultural machine and an agricultural worker according to the present embodiment may be implemented in a computer, by causing the computer to perform desired processes.

In the aforementioned example, under the management of access to a field by a processing unit of a server, a controller of the agricultural machine performs self-driving control to cause the agricultural machine to move to a field. Instead of this, however, the processing unit of the server may perform self-driving control to cause one or more agricultural machines to move to a field. In this case, self-driving of the agricultural machine(s) may be realized through remote manipulations at the server.

A system that provides various functions according to embodiments can be mounted on an agricultural machine lacking such functions as an add-on. Such a system may be manufactured and sold independently from the agricultural machine. A computer program for use in such a system may also be manufactured and sold independently from the agricultural machine. The computer program may be provided in a form stored in a computer-readable, non-transitory storage medium, for example. The computer program may also be provided through downloading via telecommunication lines (e.g., the Internet).

### INDUSTRIAL APPLICABILITY

The technique according to the present disclosure is applicable to agricultural machines, such as tractors, harvesters, rice transplanters, vehicles for crop management, vegetable transplanters, mowers, seeders, spreaders, or agricultural robots, for example.

### REFERENCE SIGNS LIST

**10:** communicator; **20:** processing unit; **21:** processor; **22, 240:** ROM; **23, 250:** RAM; **30, 170, 260:** storage device; **60:** network; **70:** agricultural worker; **100:** server computer; **100:** server; **101:** vehicle body; **102:** prime mover; **103:** transmission; **104:** tire; **105:** cabin; **106:** steering device; **107:** driver's seat; **108:** linkage device; **130:** positioning device; **131:** GNSS receiver; **135:** inertial measurement unit; **136:** obstacle sensor; **137:** RTK receiver; **138:** processing circuit; **140:** drive device; **150:** steering wheel sensor; **151:** angle-of-turn sensor; **152:** wheel axis sensor; **153:** operational terminal; **154:** operation switches; **155:** camera; **156:** LiDAR sensor; **160:** control system; **180:** controller; **181** to **185:** electronic control unit (ECU); **200:** terminal apparatus; **210:** input device; **220:** display device; **230:** processor; **270:** communicator; **300:** agricultural machine; **300A:** first agricultural machine; **300B:** second agricultural machine; **300C:** third agricultural machine; **400:** implement; **1000:** management system; **F1** to **F3:** field

## Claims

1. A management system for managing access of a plurality of agricultural machines to a field, comprising a processing unit that,
while a first agricultural machine among the plurality of agricultural machines is performing an agricultural task in the field, and if a conflict of agricultural tasks for the field exists between the first agricultural machine and a second agricultural machine among the plurality of agricultural machines, allows at least one of the first agricultural machine and the second agricultural machine determined based on priority data to perform the agricultural task for the field.

2. The management system of claim 1, comprising a storage device to store the priority data, the priority data that includes information of a respective priority level assigned in accordance with a kind of agricultural task to be performed by each of the plurality of agricultural machines.

3. The management system of claim 1 or 2, wherein, when the priority level of the second agricultural machine is higher than the priority level of the first agricultural machine, the processing unit allows the second agricultural machine to perform the agricultural task for the field with priority over the first agricultural machine.

4. The management system of claim 3, wherein,
when the priority level of the second agricultural machine is higher than the priority level of the first agricultural machine,
the processing unit causes the first agricultural machine to stop the agricultural task for the field, and allows the second agricultural machine to perform the agricultural task for the field.

5. The management system of claim 4, wherein, when causing the first agricultural machine to stop the agricultural task for the field, the processing unit further causes the first agricultural machine to exit the field.

6. The management system of claim 2, wherein, when the priority level of the first agricultural machine and the priority level of the second agricultural machine are equal, the processing unit allows the first agricultural machine and the second agricultural machine to perform the agricultural tasks for the field.

7. The management system of claim 6, wherein,
when the priority level of the first agricultural machine and the priority level of the second agricultural machine are equal,
the processing unit allows the first agricultural machine to continue the agricultural task for the field, and further allows the second agricultural machine perform the agricultural task for the field.

8. The management system of claim 4, 5 or 7, wherein, after the agricultural task by the second agricultural machine for another field distinct from the field is finished, in response to receiving a notification of completion of the agricultural task transmitted from the second agricultural machine, the processing unit allows the second agricultural machine to perform the agricultural task for the field.

9. The management system of claim 1, wherein, when a conflict of agricultural tasks for the field exists between the first agricultural machine, the second agricultural machine, and a third agricultural machine among the plurality of agricultural machines, the processing unit allows an agricultural machine to which a highest priority level is assigned among the first agricultural machine, the second agricultural machine, and the third agricultural machine to perform the agricultural task for the field.

10. The management system of any of claims 2 to 8, wherein,
the priority data further includes information of a priority level assigned to an agricultural worker that is higher than the priority level of the second agricultural machine; and,
while the agricultural worker is performing an agricultural task in the field, if the second agricultural machine is trying to access the field, the processing unit disallows the second agricultural machine to perform the agricultural task for the field, based on the priority data.

11. The management system of any of claims 2 to 8, wherein,
the priority data further includes information of a priority level assigned to an agricultural worker that is higher than the priority level of the second agricultural machine; and,
while the agricultural worker is performing an agricultural task in the field, if the second agricultural machine is trying to access the field, the processing unit notifies a terminal apparatus being used by the agricultural worker that the second agricultural machine is trying to access the field.

12. The management system of any of claims 1 to 11, wherein the processing unit manages a schedule of agricultural tasks to be performed by each of the plurality of agricultural machines.

13. The management system of claim 12, wherein, when causing the first agricultural machine to exit the field while the first agricultural machine is performing an agricultural task in the field, the processing unit updates the schedule of agricultural tasks to be performed by the first agricultural machine.

14. A management system for managing access to a field between an agricultural machine and an agricultural worker, the management system comprising:
a storage device to store priority data including information of a priority level of the agricultural machine that is assigned to the agricultural machine and a priority level that is assigned to the agricultural worker and is higher than the priority level of the agricultural machine; and,
a processing unit that, if a conflict of agricultural tasks for the field exists between the agricultural machine and the agricultural worker while the agricultural worker is performing the agricultural task in the field, allow the agricultural worker to continue the agricultural task for the field with priority over the agricultural machine, based on the priority data.

15. A computer-implemented method for managing access of a plurality of agricultural machines to a field, the method causing a computer to execute:
while a first agricultural machine among the plurality of agricultural machines is performing an agricultural task in the field, if a conflict of agricultural tasks for the field exists between the first agricultural machine and a second agricultural machine among the plurality of agricultural machines, allowing at least one of the first agricultural machine and the second agricultural machine determined based on priority data to perform the agricultural task for the field.

16. A computer-implemented method for managing access to a field between an agricultural machine and an agricultural worker, the method causing a computer to execute:
from a storage device to store priority data including information of a priority level of the agricultural machine that is assigned to the agricultural machine and a priority level that is assigned to the agricultural worker and is higher than the priority level of the agricultural machine, reading the priority data; and
if a conflict of agricultural tasks for the field exists between the agricultural machine and the agricultural worker while the agricultural worker is performing the agricultural task in the field, allowing the agricultural worker to continue the agricultural task for the field with priority over the agricultural machine, based on the priority data.
